(19) **Europäisches Patentamt / European Patent Office / Office européen des brevets**

(11) **EP 4 668 535 A1**

(12) **EUROPEAN PATENT APPLICATION**
published in accordance with Art. 153(4) EPC

(43) Date of publication:
24.12.2025 Bulletin 2025/52

(21) Application number: 24832229.9

(22) Date of filing: 07.05.2024

(51) International Patent Classification (IPC):
$H02J\ 7/00^{(2006.01)}$    $H02J\ 7/34^{(2006.01)}$
$A47L\ 9/28^{(2006.01)}$    $A47L\ 9/04^{(2006.01)}$
$G01R\ 19/165^{(2006.01)}$    $H02M\ 1/32^{(2007.01)}$

(52) Cooperative Patent Classification (CPC):
A47L 9/2831; A47L 9/2884; A47L 9/2889

(86) International application number:
PCT/KR2024/006097

(87) International publication number:
WO 2025/005445 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.06.2023 KR 20230083774
18.08.2023 KR 20230108548

(71) Applicant: Samsung Electronics Co., Ltd.
Suwon-si, Gyeonggi-do 16677 (KR)

(72) Inventors:
• LEE, Seongu
Suwon-si, Gyeonggi-do 16677 (KR)
• OH, Hyeonjoon
Suwon-si, Gyeonggi-do 16677 (KR)
• LIM, Seungmoo
Suwon-si, Gyeonggi-do 16677 (KR)
• JEONG, Jaeshik
Suwon-si, Gyeonggi-do 16677 (KR)

(74) Representative: Gulde & Partner
Patent- und Rechtsanwaltskanzlei mbB
Berliner Freiheit 2
10785 Berlin (DE)

(54) **CLEANER FOR REDUCING INRUSH CURRENT AND METHOD FOR REDUCING INRUSH CURRENT OF CLEANER**

(57) A cleaner includes a brush device including a voltage detection circuit configured to measure a voltage applied to the brush device from a battery, a capacitor charged with the voltage applied to the brush device from the battery, an inrush current reduction circuit including a resistor configured to reduce an inrush current which occurs in charging the capacitor and a switching device used to control the inrush current, and a processor configured to turn off the switching device included in the inrush current reduction circuit based on a drop rate of the voltage measured through the voltage detection circuit being at least a threshold rate.

FIG. 1

**Description**

TECHNICAL FIELD

The disclosure relates to a cleaner for reducing an inrush current and a method of reducing the inrush current of the cleaner.

BACKGROUND ART

Wireless cleaners are a type of cleaner that charges and uses a battery built into the cleaner without a need for connecting a wire to an outlet. The wireless cleaner may include a suction motor for generating suction force to suck up debris, such as dust along with air, through a cleaner head (brush) with the suction force generated by the suction motor, and separate and collect the debris from the air.

The variety of types of cleaner heads (brushes) connected to a main body of the wireless cleaner has recently increased. The brushes of the wireless cleaner may be generally classified into a main brush used for cleaning the floor and an auxiliary brush used for a special purpose. To adapt to various cleaning environments, types of the auxiliary brush used for special purposes are being further subdivided. Various brushes may differ in their mechanical structure and motor specification (consumption power, form, etc.). The user may attach or detach many different types of brushes to or from the main body or pipe according to the cleaning purpose or cleaning environment.

Disclosure of Invention

Solution to Problem

According to an embodiment of the disclosure, a cleaner includes a cleaner body including a battery, and a brush device connected to the cleaner body directly or through an extension pipe. The brush device may include a voltage detection circuit configured to measure a voltage applied to the brush device from the battery, a capacitor charged with the voltage applied from the battery to the brush device, an inrush current reduction circuit including a resistor configured to reduce an inrush current which occurs in charging the capacitor and a switching device used to control the inrush current, and a processor configured to turn off the switching device included in the inrush current reduction circuit when a drop rate of the voltage measured through the voltage detection circuit is at least a threshold rate.

According to an embodiment of the disclosure, a method of reducing an inrush current of a cleaner includes measuring, by a processor of a brush device through a voltage detection circuit, a voltage applied to the brush device from a battery, determining, by the processor of the brush device, whether a drop rate of the voltage measured through the voltage detection circuit is at least a threshold rate, and turning off, by the processor of the brush device, a switching device included in an inrush current reduction circuit based on the drop rate of the voltage measured through the voltage detection circuit being at least the threshold rate.

Brief Description of Drawings

The above and other exemplary embodiments, advantages and features of this disclosure will become more apparent by describing in further detail exemplary embodiments thereof with reference to the accompanying drawings.

FIG. 1 is a diagram for describing a cleaner for reducing an inrush current, according to an embodiment of the disclosure.
FIG. 2 is a diagram for describing functions of a cleaner body, according to an embodiment of the disclosure.
FIG. 3 is a diagram for describing operations of processors of a cleaner, according to an embodiment of the disclosure.
FIG. 4 is a diagram for describing a brush device, according to an embodiment of the disclosure.
FIG. 5 is a diagram for describing an operation of detecting a type of a brush device, according to an embodiment of the disclosure.
FIG. 6 is a diagram for describing identification (ID) resistors of brush devices, according to an embodiment of the disclosure.
FIG. 7A is a block diagram for describing functions of a cleaner for signal line communication, according to an embodiment of the disclosure.
FIG. 7B is a block diagram for describing functions of a cleaner including an extension pipe, according to an embodiment of the disclosure.
FIG. 7C is a diagram for describing a circuit for signal line communication of a cleaner, according to an embodiment of the disclosure.

FIG. 8 is a diagram for describing a power circuit of a brush device, according to an embodiment of the disclosure.

FIG. 9 is a flowchart for describing a method of reducing an inrush current of a cleaner, according to an embodiment of the disclosure.

FIG. 10 is a flowchart for describing a method of turning on a switching device included in an inrush current reduction circuit, according to an embodiment of the disclosure.

FIG. 11 is a diagram for describing an inrush current reduction circuit and a voltage detection circuit, according to an embodiment of the disclosure.

FIG. 12 is a diagram for describing an inrush current reduction effect, according to an embodiment of the disclosure.

FIG. 13 is a diagram for describing an inrush current, according to an embodiment of the disclosure.

FIG. 14 is a diagram for describing an inrush current reduction circuit, according to an embodiment of the disclosure.

FIG. 15 is a diagram for describing an inrush current reduction circuit, according to an embodiment of the disclosure.

FIG. 16 is a diagram for describing an inrush current reduction circuit, according to an embodiment of the disclosure.

FIG. 17 is a diagram for describing an inrush current reduction circuit, according to an embodiment of the disclosure.

FIG. 18 is a flowchart for describing a method of reducing an inrush current of a cleaner, according to an embodiment of the disclosure.

FIG. 19 is a flowchart for describing a method of switching an operation mode of a cleaner, according to an embodiment of the disclosure.

FIG. 20 is a diagram for describing a brush mode and a handy mode, according to an embodiment of the disclosure.

Mode for the Invention

Terms as used herein will be briefly described, and an embodiment of the disclosure will be described in detail.

The terms are selected as common terms that are currently widely used, taking into account principles of the disclosure, which may however depend on intentions of those of ordinary skill in the art, judicial precedents, emergence of new technologies, and the like. Some terms as used herein are selected at the applicant's discretion, in which case, the terms will be explained later in detail in connection with embodiments of the disclosure. Therefore, the terms should be defined based on their meanings and descriptions throughout the disclosure.

Throughout the disclosure, the expression "at least one of a, b or c" indicates only a, only b, only c, both a and b, both a and c, both b and c, all of a, b, and c, or variations thereof.

The term "include (or including)" or "comprise (or comprising)" is inclusive or open-ended and does not exclude additional, unrecited elements or method steps. The terms "unit", "module", "block", etc., as used herein each represent a unit for handling at least one function or operation, and may be implemented in hardware, software, or a combination thereof.

An embodiment of the disclosure will now be described in detail with reference to accompanying drawings so as to be readily practiced by those of ordinary skill in the art. However, the embodiment of the disclosure may be implemented in many different forms, and not limited thereto as will be discussed herein. In the drawings, parts unrelated to the description are omitted for clarity, and like numerals refer to like elements throughout the specification.

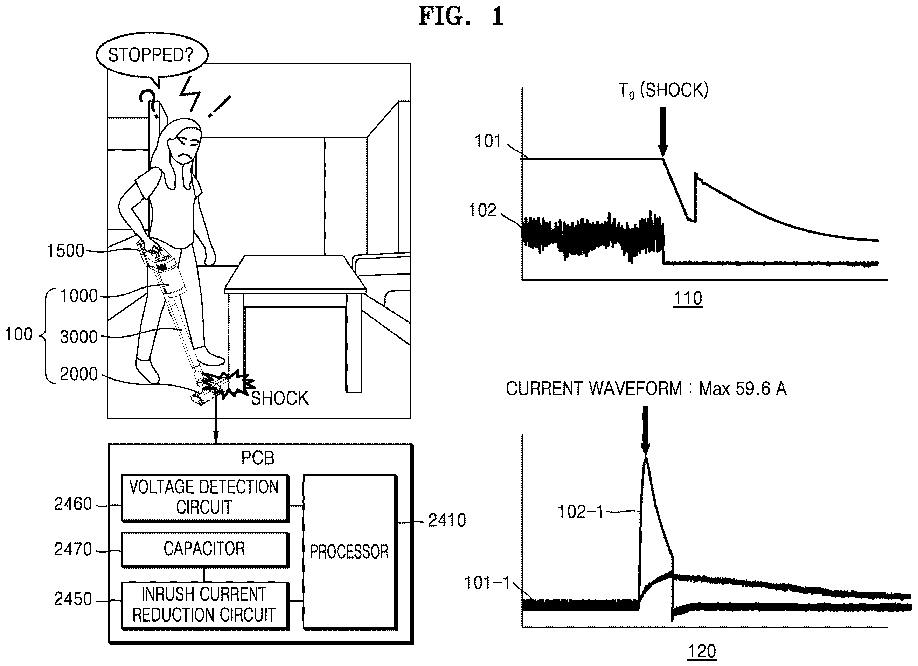

FIG. 1 is a diagram for describing a cleaner for reducing an inrush current, according to an embodiment of the disclosure.

Although a wireless cleaner 100 is described as an example in FIG. 1, it is not limited thereto. For example, the embodiment of the disclosure will be equally applied to a robot cleaner as well.

The wireless cleaner 100 may refer to a vacuum cleaner having a rechargeable battery built therein and having no need for connecting a power cord to an outlet for cleaning. **In** an embodiment of the disclosure, the wireless cleaner 100 may be a stick-type cleaner including a cleaner body 1000, a brush device 2000 and an extension pipe 3000. However, not all the components illustrated in FIG. 1 are essential. The wireless cleaner 100 may be implemented with more or fewer components than illustrated in FIG. 1. For example, the wireless cleaner 100 may be implemented with the cleaner body 1000 and the brush device 2000 but without the extension pipe 3000. Furthermore, the wireless cleaner 100 may further include a station (not shown) for battery charging and dust discharging from the cleaner body 1000.

The cleaner body 1000 may include a suction motor that creates a vacuum in the wireless cleaner 100, a dust collection container (dust container) that receives debris sucked up from a surface to be cleaned (e.g., floor, bedclothes, sofa, etc.), and a handle to be held by the user to move the cleaner body 1000.

The cleaner body 1000 may include an installation part on which the extension pipe 3000 or the brush device 2000 is mounted. The extension pipe 3000 may be formed with a flexible hose or a pipe having certain rigidity. The brush device 2000 may be detachably coupled to an end of the extension pipe 3000. The other end of the extension pipe 3000 may be detachably coupled to an extension pipe installation part of the cleaner body 1000. The extension pipe 3000 may deliver suction force generated by the suction motor of the cleaner body 1000 to the brush device 2000, and move the air and debris sucked up through the brush device 2000 to the cleaner body 1000. The extension pipe 3000 may be formed in multiple stages between the cleaner body 1000 and the brush device 2000. There may be two or more extension pipes 3000

The brush device 2000 coupled to the cleaner body 1000 or the extension pipe 3000 is a device configured to suck up air and debris on the surface to be cleaned by pressing against the surface to be cleaned. The brush device 2000 may also be referred to as a cleaner head. The brush device 2000 may be rotationally coupled with the extension pipe 3000. The brush device 2000 may include a motor, a drum with a rotational brush attached thereto, etc., without being limited thereto. The brush device 2000 may have various types. For example, the brush device 2000 may be classified into a normal brush (floor brush), a carpet brush, a bedding brush, a pet brush, a wet mop brush, a multi-brush (a brush available for both carpets and floors), etc., depending on the purpose of use, without being limited thereto. Maximum motor output may differ by the type of the brush device 2000, and different electrical inputs may be required depending on characteristics by use. An embodiment where the brush device 2000 is a multi-brush including a circuit for driving the motor will now be described as an example, but the disclosure is not limited thereto.

**In** an embodiment of the disclosure, each of the cleaner body 1000, the brush device 2000 and the extension pipe 3000 included in the wireless cleaner 100 may include power lines (e.g., a positive (+) power line and a negative (-) power line) and a signal line. The power line may be a line to deliver power supplied from a battery 1500 to the cleaner body 1000 and the brush device 2000 coupled to the cleaner body 1000. The signal line is different from the power line, and may be a line configured to transmit and receive signals between the cleaner body 1000 and the brush device 2000. The signal line may be implemented to be connected to the power line in the brush device 2000.

Referring to FIG. 1, the wireless cleaner 100 may receive a momentary shock during cleaning. In this case, a connector of the brush device 2000 may be momentarily decoupled from a connector of the extension pipe 3000 and coupled back thereto, or a connector of the cleaner body 1000 may be momentarily decoupled from the connector of the extension pipe 3000 and coupled back thereto. This phenomenon is referred to herein as hot-swap or chattering.

When the connector of the brush device 2000 is momentarily decoupled from the connector of the extension pipe 3000 (or when the connector of the cleaner body 1000 is momentarily decoupled from the connector of the extension pipe 3000), power supply to the brush device 2000 may be stopped, and thus, a capacitor 2470 included in the brush device 2000 may be sharply discharged. The capacitor 2470 may be referred to as an electrolytic condenser, an electrolytic capacitor or a first capacitor. The electrolytic capacitor may be a small large-capacitive capacitor used to remove ripple current that remains in a smoothing circuit for providing power for an electronic circuit or a bias direct current (DC) voltage. Especially, in a case that the brush device 2000 is a multi-brush that may be used for both the floor and the carpet, a driving load may be large, and thus the capacitor 2470 may be quickly discharged in a short period of time. In the case that the capacitor 2470 is discharged, operation of the brush device 2000 may be suspended. In one embodiment, when the connector of the brush device 2000 is momentarily decoupled from the connector of the extension pipe 3000 and coupled back thereto (or when the connector of the cleaner body 1000 is momentarily decoupled from the connector of the extension pipe 3000 and coupled back thereto), the discharged capacitor 2470 is charged, causing a significant inrush current from the cleaner body 1000 to the brush device 2000. The inrush current may be a maximum instantaneous pressure current that flows momentarily. For example, the inrush current may refer to a current flowing excessively when the capacitor stores energy.

Referring to a first image 110 of FIG. 1, a shock occurs to the wireless cleaner 100 at time $T_0$, causing the brush device 2000 to be momentarily decoupled from the extension pipe 3000 or the cleaner body 1000. **In** this case, the voltage applied to the brush device 2000 may be rapidly reduced (see a brush supply voltage waveform 101) and the current applied to the brush device 2000 may also be rapidly reduced (see a brush supply current waveform 102), and the capacitor 2470 may be discharged.

Referring to a second image 120 of FIG. 1, in the case that the brush device 2000 is momentarily decoupled from the extension pipe 3000 or the cleaner body 1000 and coupled back thereto, the voltage applied to the brush device 2000 may increase (see a brush supply voltage waveform 101-1) and thus the capacitor 2470 is charged, causing a significant inrush current (see a brush supply current waveform 102-1). For example, an inrush current of up to 56.9 A may occur.

In an embodiment of the disclosure, the cleaner body 1000 may monitor an operation current of the brush device 2000, and when a current of at least a threshold value (e.g., 4.9 A) flows to the brush device 2000, the cleaner body 1000 may block power supply to the brush device 2000 to protect the brush device 2000. Hence, when a significant inrush current occurs to the brush device 2000, power supply to the brush device 2000 may be blocked and thus, operation of the brush device 2000 may be suspended. Once the operation of the wireless cleaner 100 is suspended, the user must power off the cleaner body 1000 and power back on to drive the brush device 2000 to restore the operation of the wireless cleaner 100, as a result the usability may be reduced.

In one embodiment, by the nature of the brush device 2000, big and small shocks may be delivered to the brush device 2000, the cleaner body 1000, the extension pipe 3000, etc., depending on the floor condition (e.g., length or density of carpet wool, a border point between the carpet and the floor, a door sill, an obstacle, etc.) or the usage condition (e.g., moving forward or backward of the brush), leading to connector chattering, and suspension of operation of the brush device 2000. Especially, due to mechanical wear and tear from long use of the wireless cleaner 100, gaps of the connectors between the cleaner body 1000 and the extension pipe 3000 or connectors between the brush device 2000 and the extension pipe 3000 or connectors between the cleaner body 1000 and the brush device 2000 may increase. In this case, the chattering phenomenon in which the brush device 2000 is momentarily decoupled from the cleaner body 1000 or the extension pipe 3000 and coupled back thereto may occur more frequently, leading to an increase in inrush current and frequently causing a phenomenon in which operation of the brush device 2000 is suspended. When the operation of the brush device 2000 is often suspended during a cleaning operation, usability of the cleaner is reduced. Furthermore, when the phenomenon in which the brush device 2000 is suspended continues or repeats, it may lead to breakdown or damage of the product. For example, a switching device (e.g., a field effect transistor (FET)) for controlling pulse width modulation (PWM) in the cleaner body 1000 may be damaged, or a power module, a motor control circuit or the like in the brush device 2000 may be damaged.

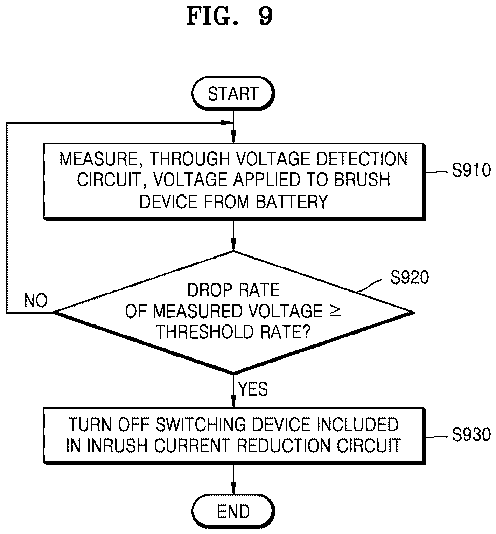

Hence, in an embodiment of the disclosure, to prevent frequent suspension of operation and product failure of the brush device 2000 due to the inrush current, the brush device 2000 may include a processor 2410, an inrush current reduction circuit 2450 and a voltage detection circuit 2460. For example, the processor 2410 of the brush device 2000 may identify whether the connector of the brush device 2000 is decoupled from the extension pipe 3000 or the cleaner body 1000 based on a battery supply voltage detected through the voltage detection circuit 2460. When the connector of the brush device 2000 is decoupled from the extension pipe 3000 or the cleaner body 1000, the processor 2410 of the brush device 2000 may turn off a switching device included in the inrush current reduction circuit 2450. When the connector of the brush device 2000 is coupled back to the extension pipe 3000 or the cleaner body 1000 (when the brush device 2000 is powered back) while the switching device included in the inrush current reduction circuit 2450 is turned off, a supply current may flow through a resistor for reducing the inrush current instead of the switching device in the inrush current reduction circuit 2450. As the capacitor 2470 may be charged or discharged while the current is flowing through the resistor included in the inrush current reduction circuit 2450, the inrush current may be significantly reduced. One example of how the cleaner reduces the inrush current according to an embodiment of the disclosure is described in detail with reference to FIG. 9.

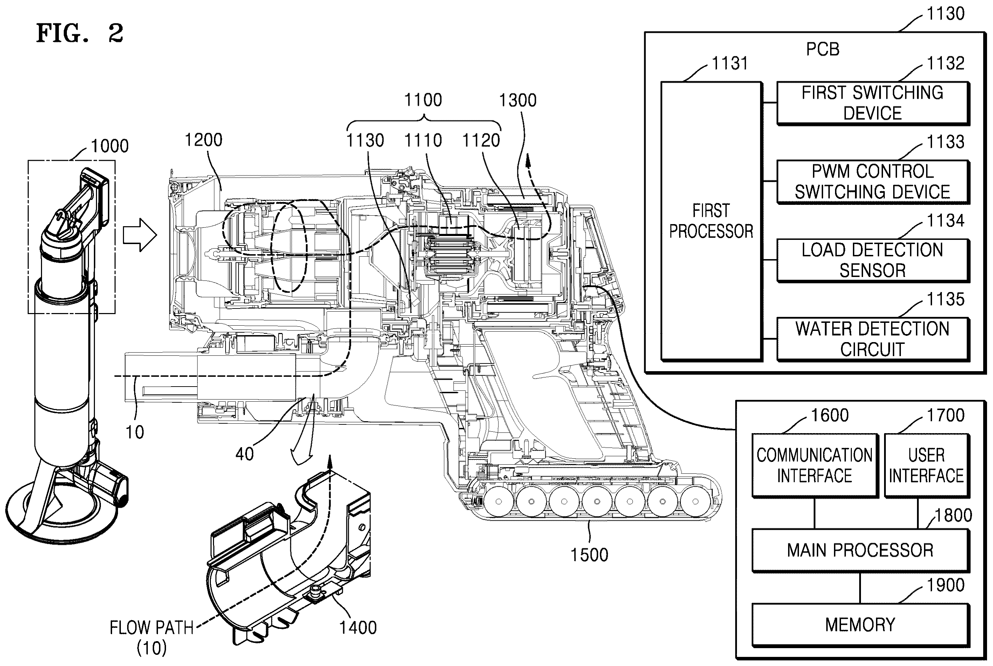

A configuration of the cleaner body 1000 will now be described in more detail in connection with FIG. 2.

FIG. 2 is a block diagram for describing functions of the cleaner body 1000, according to an embodiment of the disclosure.

Referring to FIG. 2, the cleaner body 1000 may include a suction force generator (hereinafter, referred to as a motor assembly 1100) that generates suction force required to suck up debris on the surface to be cleaned, a dust collection container 1200 (also, referred to as a dust container) that contains the debris sucked up from the surface to be cleaned, a filter module 1300, a pressure sensor 1400, the battery 1500 for supplying power to the motor assembly 1100, a communication interface 1600, a user interface 1700, a main processor 1800 and a memory 1900. However, not all the components illustrated in FIG. 2 are essential. The cleaner body 1000 may be implemented with more or fewer components than illustrated in FIG. 2. For example, the cleaner body 1000 may further include a motion sensor (not shown).

The respective components will now be described.

The motor assembly 1100 may include a suction motor 1110 that converts electrical power to mechanical rotation force, an impeller 1120 rotationally connected to the suction motor 1110, and a printed circuit board (PCB) 1130 connected to the suction motor 1110. The suction motor 1110 and the impeller 1120 rotationally connected to the suction motor 1110 may create a vacuum in the cleaner. The vacuum refers to a state lower than the atmospheric pressure. The suction motor 1110 may include a brushless motor (hereinafter, referred to as a brushless direct current (BLDC) motor), but is not limited thereto.

The PCB 1130 may include a processor (hereinafter, referred to as a first processor 1131) for controlling the suction motor 1110 and communications with the brush device 2000, a first switching device 1132 connected to the signal line, a switching device 1133 (hereinafter, referred to as a PWM control switching device) used for power supply to the brush device 2000, a load detection sensor 1134 for detecting a load of the brush device 2000, and a water detection circuit 1135 for detecting water brought into the cleaner body 1000 through a flow path, without being limited thereto. The PWM control switching device 1133 may include an FET, a bipolar junction transistor (BJT), an insulated gate bipolar transistor (IGBT), etc. The load detection sensor 1134 may include a shunt resistor, a shunt resistor and an operational amplifier (OP-AMP), a current detection sensor, a magnetic field detection sensor (in a non-contact type), etc. For convenience of explanation, an FET will be described as an example of the PWM control switching device 1133 and a shunt resistor will be described as an example of the load detection sensor 1134. The water detection circuit 1135 may include a part that is opened when no liquid flows in and that creates resistance in response to an inflow of a liquid. The water detection circuit 1135 may include a voltage divider circuit. The water detection circuit 1135 may be located between a positive (+) terminal and a negative (-) terminal that electrically connect the motor assembly 1100 and the battery 1500. The water detection circuit 1135 may be connected to an input port of the first processor 1131 and a positive (+) power line that receives power from the battery 1500, but is not limited thereto.

The motor assembly 1100 may have a reverse motor structure in which locations of the impeller 1120 and the PCB 1130 are reversed. In the reverse motor structure, based on an air flow direction, the PCB 1130 may be located lower than the suction motor 1110 and the impeller 1120 may be located higher than the suction motor 1110. Accordingly, the impeller 1120 may be closer to the filter module 1300 than the PCB 1130 is.

The first processor 1131 may obtain data related to status of the suction motor 1110 (hereinafter, referred to as status data) and data about water inflow, and send the status data of the suction motor 1110 and the data about water inflow to the main processor 1800. Furthermore, the first processor 1131 may control (e.g., turn on or turn off) the operation of the first switching device 1132 connected to the signal line to transmit a signal (hereinafter, referred to as a first signal) to the brush device 2000 through the signal line. The first switching device 1132 is a device that enables a state of the signal line to be low. For example, the first switching device 1132 is a device that enables the voltage of the signal line to be 0 V. The first signal may include data that indicates at least one of a target number of revolutions per minute of the rotating brush (hereinafter, referred to as a target drum rpm) of the brush device 2000, a target trip level of the brush device 2000 or consumption power of the suction motor 1110, without being limited thereto. For example, the first signal may include data for controlling a lighting device included in the brush device 2000. The first signal may be represented in a preset number of bits. For example, the first signal may be represented in 5 bits or 8 bits, and may have a transmission period of 10 ms per one bit, but is not limited thereto.

The first processor 1131 may detect a signal (hereinafter, referred to as a second signal) transmitted from the brush device 2000 through the signal line. The second signal may include data that indicates a current state of the brush device 2000, but is not limited thereto. For example, the second signal may include data about a current operating condition (e.g., a current drum rpm, a current trip level, a current lighting device setting value, etc.). Furthermore, the second signal may further include data that indicates a type of the brush device 2000. The first processor 1311 may send the data that indicates a current state of the brush device 2000 or the data that indicates a type of the brush device 2000 included in the second signal to the main processor 1800.

The motor assembly 1100 may be located in the dust collection container (dust container 1200). The dust collection container 1200 may be arranged to filter and collect debris or dust in the air brought in through the brush device 2000. The dust collection container 1200 may be arranged to be detachable from the cleaner body 1000.

The dust collection container 1200 may collect debris in a cyclone method that separates the debris by using centrifugal force. The air from which the debris is removed according to the cyclone method may be released out of the cleaner body 1000 while the debris may be stored in the dust collection container 1200. A multi-cyclone may be arranged in the dust collection container 1200. The dust collection container 1200 may be arranged such that the debris is captured under the multi-cyclone. The dust collection container 1200 may include a dust collection container door (also referred to as a cover of the dust container 1200) arranged to open the dust collection container 1200 when connected to a station. The dust collection container 1200 may include a first dust collector for collecting debris with relatively large volume, which is captured for the first time, and a second dust collector for collecting debris with relatively small volume, which is captured by the multi-cyclone. Both the first dust collector and the second dust collector may be arranged to be open to the outside when the dust collection container door is opened.

The filter module 1300 may filter out ultra-fine dust that is not filtered out in the dust collection container 1200. The filter module 1300 may include an outlet, through which the air having passed the filter module 1300 is released out of the cleaner. The filter module 1300 may include a motor filter, a high efficiency particulate air (HEPA) filter, etc., but is not limited thereto.

The pressure sensor 1400 may measure pressure in the flow path (hereinafter, also referred to as a flow path pressure). When arranged at a suction end (e.g., a suction duct 40), the pressure sensor 1400 may measure a change in flow rate at a corresponding location by measuring static pressure. The pressure sensor 1400 may be an absolute pressure sensor or a relative pressure sensor. In a case that the pressure sensor 1400 is the absolute pressure sensor, the main processor 1800 may use the pressure sensor 1400 to detect a first pressure value before operating the suction motor 1110. The main processor 1800 may detect a second pressure value after driving the suction motor 1110 at a target rpm, and use a difference between the first pressure value and the second pressure value as a pressure value in the flow path. In this case, the first pressure value may be a pressure value according to internal/external influences such as weather, altitude, a state of the cleaner, an inflow amount of dust, etc., and the second pressure value may be a pressure value according to internal/external influences such as altitude, a state of cleaner, an inflow amount of dust, etc., and a pressure value from driving of the suction motor 1110, and the difference between the first pressure value and the second pressure value may be a pressure value from driving of the suction motor 1110. Hence, when the difference between the first pressure value and the second pressure value is used as the pressure value in the flow path, the internal/external influences other than the suction motor 1110 may be minimized.

The flow path pressure measured by the pressure sensor 1400 may be used to identify a current usage environment condition (e.g., a condition of a surface to be cleaned (a floor, a carpet, a mat, a corner, etc.), a state of being uplifted from the surface to be cleaned, etc.) of the brush device 2000, or may be used to measure suction force that varies by a degree of pollution of the dust collection container 1200 or an extent of collection of dust.

The pressure sensor 1400 may be located at a suction end (e.g., the suction duct 40). The suction duct 40 may be a structure for moving a fluid including debris to the dust collection container 1200 by connecting the dust collection container 1200 to the extension pipe 3000 or the dust collection container 1200 to the brush device 2000. The pressure sensor 1400 may be located at an end of a linear portion (or a knee point of the linear portion and a curved portion) of the suction duct 40 by taking into account pollution from debris/dust, but is not limited thereto. The pressure sensor 1400 may be located in the middle of the linear portion of the suction duct 40. In one embodiment, when the pressure sensor 1400 is located in the suction duct 40, the pressure sensor 1400 is located at a front end of the suction motor 1110 for generating suction force, the pressure sensor 1400 may be implemented as a negative pressure sensor.

An embodiment where the pressure sensor 1400 is located in the suction duct 40 is taken as an example in the disclosure, the disclosure is not limited thereto. The pressure sensor 1400 may be located at a discharge end (e.g., in the motor assembly 1100). In the case that the pressure sensor 1400 is located at the discharge end, the pressure sensor 1400 may be implemented as a positive pressure sensor because it is located at a rear end of the suction motor 1110. Furthermore, the pressure sensor 1400 may be provided in the plural in the cleaner.

The battery 1500 may be detachably mounted in the cleaner body 1000. The battery 1500 may also be referred to as a battery pack or a battery module. The battery 1500 may be electrically connected to a charging terminal arranged at the station. The battery 1500 may be charged by receiving power from the charging terminal. In an embodiment of the disclosure, the battery 1500 may include a processor (e.g., a micro-computer, a microprocessor computer or a microprocessor controller) for controlling the voltage applied to the cleaner body 1000 and communicating with the main processor 1800. The battery 1500 may perform data communication with the main processor 1800. The battery 1500 may periodically transmit, to the main processor 1800, information relating to a battery charge state, an output voltage, etc.

The battery 1500 may include a light emitting diode (LED) display to indicate charging, discharging or a state of the battery 1500. For example, the LED display may come in red, orange or yellow according to a charge rate, and may come in green after charging is completed.

The communication interface 1600 may include a module for performing communication with an external device. For example, the cleaner body 1000 may communicate with the station or a server device through the communication interface 1600. The communication interface 1600 may include a short-range communication module, a long-range communication module, etc. The short-range communication module may include a bluetooth communication module, a bluetooth low energy (BLE) communication module, a near field communication (NFC) module, a wireless local area network (WLAN), e.g., Wi-Fi, communication module, a Zigbee communication module, an infrared data association (IrDA) communication module, a Wi-Fi direct (WFD) communication module, an ultra wideband (UWB) communication module, an Ant+ communication module, etc., without being limited thereto. The long-range communication module may be used to remotely communicate with the server device. The long-range communication module may include the Internet, a computer network (e.g., a local area network (LAN) or wide area network (WAN)), or a mobile communication module. The mobile communication module may include a 3rd generation (3G) module, a 4th generation (4G) module, a 5th generation (5G) module, a long term evolution (LTE) module, a narrow band (NB) Internet of things (IoT) module, an LTE machine type communication (LTE-M), etc., without being limited thereto.

The user interface 1700 may be provided on the handle. The user interface 1700 may include an input interface and an output interface. Through the user interface 1700, the cleaner body 1000 may receive a user input related to an operation of the cleaner and output information related to an operation of the cleaner. The cleaner body 1000 may output, through the user interface 1700, information about an operation state, information about battery remains, information about a docking state, information about a state of the dust container 1200, information about a state of a dust bag, information about water inflow, etc.

The input interface may include at least one of a motion input, a voice input (e.g., a microphone), or an operation input (e.g., a power button, or a suction force control button), but is not limited thereto. The output interface may include a light emitting diode (LED) display, a liquid crystal display (LCD), a touch screen, a speaker, etc., without being limited thereto.

The cleaner body 1000 may include at least one processor. The cleaner body 1000 may include one processor or a plurality of processors. For example, the cleaner body 1000 may include the main processor 1800 connected to the user interface 1700, and the first processor 1131 connected to the suction motor 1110. The at least one processor may control general operation of the cleaner. For example, the at least one processor may determine consumption power (intensity of suction force) of the suction motor 1110, drum rpm of the brush device 2000, a trip level of the brush device 2000, etc.

In the disclosure, the at least one processor may include at least one of a central processing unit (CPU), a graphics processing unit (GPU), an accelerated processing unit (APU), a many integrated core (MIC), a digital signal processor (DSP) or a neural processing unit (NPU). The at least one processor may be implemented in the form of a system on chip (SoC) with one or more electronic components integrated therein. Each of the at least one processor may be implemented in separate hardware (H/W). The at least one processor may also be referred to as a micro-computer, microprocessor computer or microprocessor controller (MICOM), a micro processor unit (MPU), or a micro controller unit (MCU).

In the disclosure, the at least one processor may be implemented with a single core processor or a multi-core processor.

The memory 1900 may store a program for processing and controlling the at least one processor and input/output data. For example, the memory 1900 may store a pre-trained artificial intelligence (AI) model (e.g., a support vector machine (SVM) algorithm), status data of the suction motor 1110, a measurement value of the pressure sensor 1400, status data of the battery 1500, status data of the brush device 2000, error occurrence data (fault history data), consumption power of the suction motor 1110, rpm of the drum with a rotating brush, a trip level, an operation sequence of the suction motor 1110 corresponding to a suction force generation pattern, a type of the brush device 2000 corresponding to a voltage value input through the signal line, a PWM frequency for each type of the brush device 2000, an average input voltage for each type of the brush device 2000, high-load reference value (or low-load reference value) for each type of the brush device 2000, information about predefined movement patterns (user gestures) corresponding to a plurality of control commands, information about water inflow to the cleaner body 1000, etc.

The memory 1900 may include an external memory and an internal memory. For example, the memory 1900 may include at least one type storage medium of a flash memory, a hard disk, a multimedia card micro type memory, a card type memory (e.g., secure digital (SD) or extreme digital (XD) memory), a random access memory (RAM), a static RAM (SRAM), a read-only memory (ROM), an electrically erasable programmable ROM (EEPROM), a programmable ROM (PROM), a magnetic memory, a magnetic disk, or an optical disk. The program stored in the memory 1900 may be classified into multiple modules on the function basis.

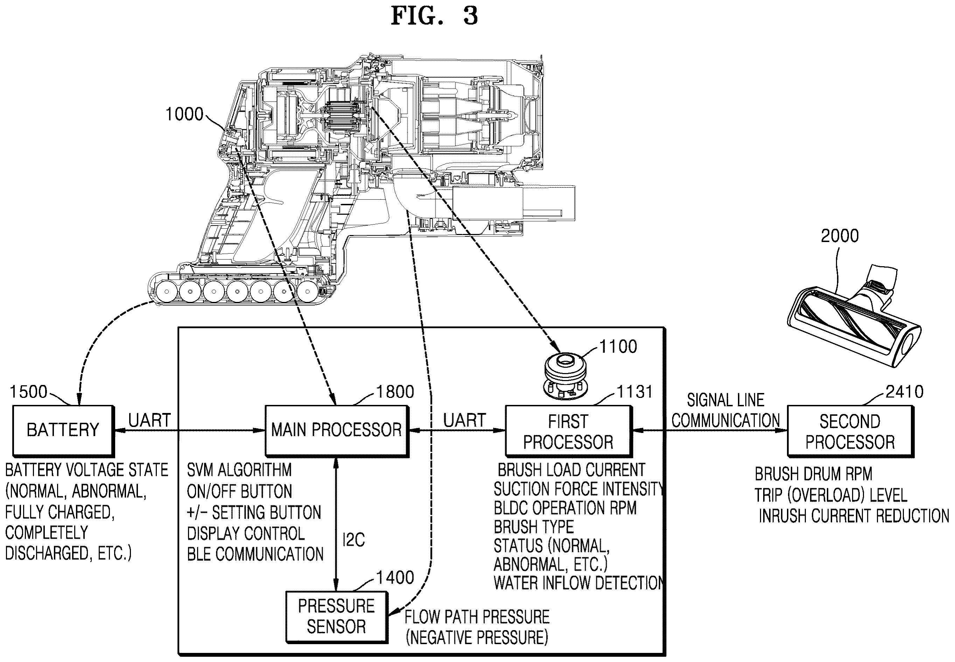

Operations of the processors of the cleaner will now be described in detail in connection with FIG. 3.

FIG. 3 is a diagram for describing operations of processors of a cleaner, according to an embodiment of the disclosure.

Referring to FIG. 3, the main processor 1800 may check states of the components of the cleaner by communicating with the battery 1500, the pressure sensor 1400, a motion sensor (not shown) (e.g., a gyro sensor or an acceleration sensor), and the first processor 1131 in the motor assembly 1100. In this case, the main processor 1800 may periodically communicate with the respective components by using universal asynchronous receiver/transmitter (UART) communication or inter integrated circuit (I2C) communication, but is not limited thereto. For example, the main processor 1800 may obtain data about a voltage state (e.g., normal, abnormal, fully charged, fully discharged, etc.) of the battery 1500 from the battery 1500 by using the UART. The main processor 1800 may obtain data about flow path pressure from the pressure sensor 1400 by using the I2C communication. The main processor 1800 may obtain angular velocity data from a gyro sensor (not shown) through the UART communication, and obtain acceleration data from an acceleration sensor (not shown) through the I2C communication.

Furthermore, the main processor 1800 may obtain data related to an intensity of suction force, rpm of the suction motor 1110, and status (e.g., normal, abnormal, etc.) of the suction motor 1110 from the first processor 1131 connected to the suction motor 1110 by using the UART communication. The suction force is electrical force consumed to operate the wireless cleaner 100 and may also be referred to as consumption power. The main processor 1800 may obtain data related to a load of the brush device 2000 and data related to a type of the brush device 2000 from the first processor 1131. The main processor 1800 may also obtain, from the first processor 1131, data related to water inflow to the cleaner body 1000.

In one embodiment, the first processor 1131 may obtain the status data (e.g., drum rpm, a trip level, normal, abnormal, etc.) of the brush device 2000 from the brush device 2000 through signal line communication with a processor (hereinafter, referred to as the second processor 2410) of the brush device 2000. The first processor may send the status data of the brush device 2000 to the main processor 1800 through the UART communication. In an embodiment of the disclosure, the first processor 1131 may send the status data of the suction motor 1110 and the status data of the brush device 2000 to the main processor 1800 at different intervals. For example, the first processor 1131 may send the status data of the suction motor 1110 to the main processor 1800 once every 0.02 seconds, and send the status data of the brush device 2000 to the main processor once every 0.2 seconds, but is not limited thereto.

The main processor 1800 may determine whether an error occurs based on the status of the components in the wireless cleaner 100, the status of the suction motor 1110, and the status of the brush device 2000, and periodically transmit data related to the error occurrence to the station device through a short-range wireless communication (e.g., BLE communication).

In a case that the first processor 1131 of the cleaner body 1000 is connected to the second processor 2410 of the brush device 2000 by the UART communication or the I2C communication, circuit devices may be damaged (e.g., a maximum voltage exceeds at a micom AD port) from the influence of high impedance and electrostatic discharge and/or over voltage due to a line in the extension pipe 3000. Hence, in an embodiment of the disclosure, the first processor 1131 of the cleaner body 1000 and the second processor 2410 of the brush device 2000 may communicate to each other by signal line communication instead of the UART communication or I2C communication. In this case, a circuit for the signal line communication may include a voltage divider circuit (hereinafter, referred to as a voltage divider) to prevent damage to circuit devices due to over voltage, power noise, surge, electrostatic discharge (ESD), electrical overstress (EOS), etc. Communication between the first processor 1131 of the cleaner body 1000 and the second processor 2410 of the brush device 2000 is not, however, limited to the signal line communication.

In an embodiment of the disclosure, when a noise reduction circuit is applied to the cleaner body 1000 and the brush device 2000, the first processor 1131 of the cleaner body 1000 and the second processor 2410 of the brush device 2000 may communicate with each other by using the UART communication or I2C communication. The noise reduction circuit may include at least one of a low pass filter, a high pass filter, a band pass filter, a damping resistor, or a divider resistor, without being limited thereto. In an embodiment of the disclosure, when a level shifter circuit is applied to the cleaner body 1000 or the brush device 2000, the first processor 1131 of the cleaner body 1000 and the second processor 2410 of the brush device 2000 may communicate with each other by using the UART communication or I2C communication. In the following description, an embodiment where the cleaner body 1000 and the brush device 2000 communicates with each other through the signal line communication will be focused for convenience of explanation.

In one embodiment, the main processor 1800 may receive a user input to a setting button (e.g., ON/OFF button or +/- setting button) included in the user interface 1700, and control an output of the LCD. The main processor 1800 may identify usage environment condition (e.g., a state of the surface to be cleaned (floor, carpet, mat or corner), a state of being uplifted from the surface to be cleaned, etc.) of the brush device 200 by using a pre-trained AI model (e.g., an SVM algorithm), and determine operation information (e.g., consumption power of the suction motor 1110, drum rpm, a trip level, etc.) of the wireless cleaner 100 that fits the usage environment condition of the brush device 2000. In this case, the main processor 1800 may send the operation information of the wireless cleaner 100 that fits the usage environment condition of the brush device 2000 to the first processor 1131. The first processor 1131 may control the intensity of suction force (consumption power or rpm) of the suction motor 1110 according to the operation information of the wireless cleaner 100, and send the operation information of the wireless cleaner 100 that fits the usage environment condition of the brush device 2000 to the second processor 2410 through signal line communication. In this case, the second processor 2410 may control the drum rpm, the trip level, a lighting device (e.g., an LED display), etc., according to the operation information of the wireless cleaner 100.

In one embodiment, when it is determined through the water detection circuit 1135 that water flows into the cleaner body 1000, the main processor 1800 may send the first processor 1131 a signal to stop driving the suction motor 1110, thereby preventing circuit damage and isolation breakdown.

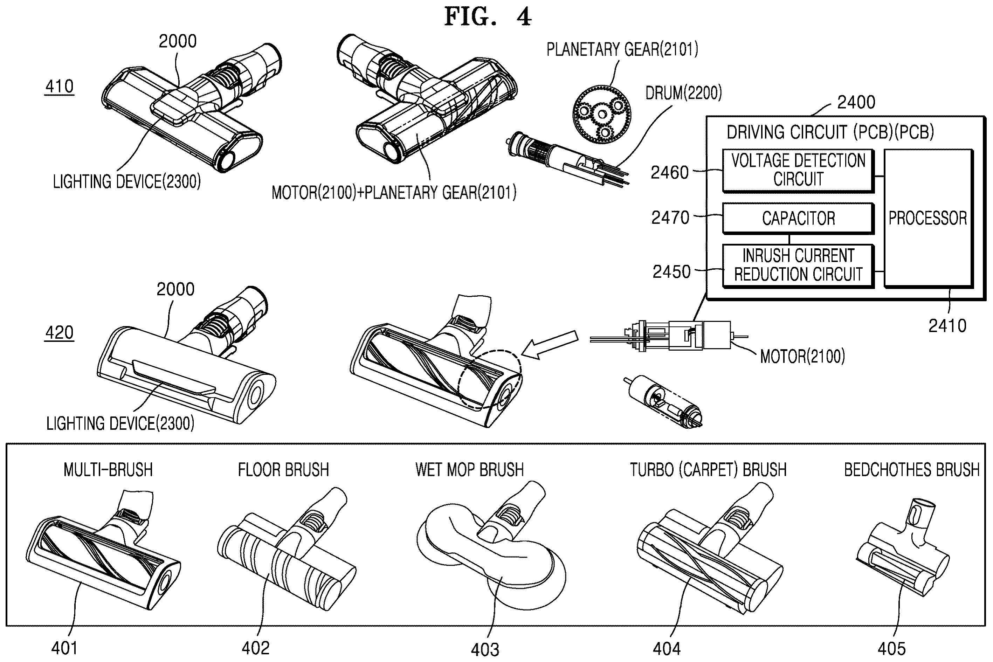

The brush device 2000 will now be described in detail in connection with FIG. 4.

FIG. 4 is a diagram for describing the brush device 2000, according to an embodiment of the disclosure.

Referring to FIG. 4, the brush device 2000 may include a motor 2100, a drum 2200 with a rotational brush attached thereto, a lighting device 2300, etc., without being limited thereto. The motor 2100 of the brush device 2000 may be arranged inside or outside the drum 2200. In a case that the motor 2100 is arranged outside the drum 2200, the drum 2200 may receive power from the motor 2100 through a belt.

Referring to 410 of FIG. 4, the motor 2100 may be a planetary geared motor. The planetary geared motor may have a form in which a DC motor is coupled to a planetary gear 2101. The planetary geared gear 2101 is to control rpm of the drum 2200 according to a gear ratio. In the case of the planetary geared motor, the rpm of the motor 2100 and the rpm of the drum 2200 may be constant or may have a varying ratio. Referring to 420 of FIG. 4, the motor 2100 may be a BLDC motor but is not limited thereto. In the case of the BLDC motor, the motor 2100 and the drum 2200 may have the same rpm.

The lighting device 2300 may lighten a dark surface to be cleaned, dust or debris on the surface to be cleaned to be easily identified, or a state of the brush device 2000 to be seen, and may be arranged on the front or a top end of the brush device 2000. The lighting device 2300 may include an LED display, but is not limited thereto. For example, the lighting device 2300 may be a laser. The lighting device 2300 may automatically operate as the motor 2100 is driven, or operate under the control of the second processor 2410. In an embodiment of the disclosure, the lighting device 2300 may be changed in color or brightness under the control of the second processor 2410.

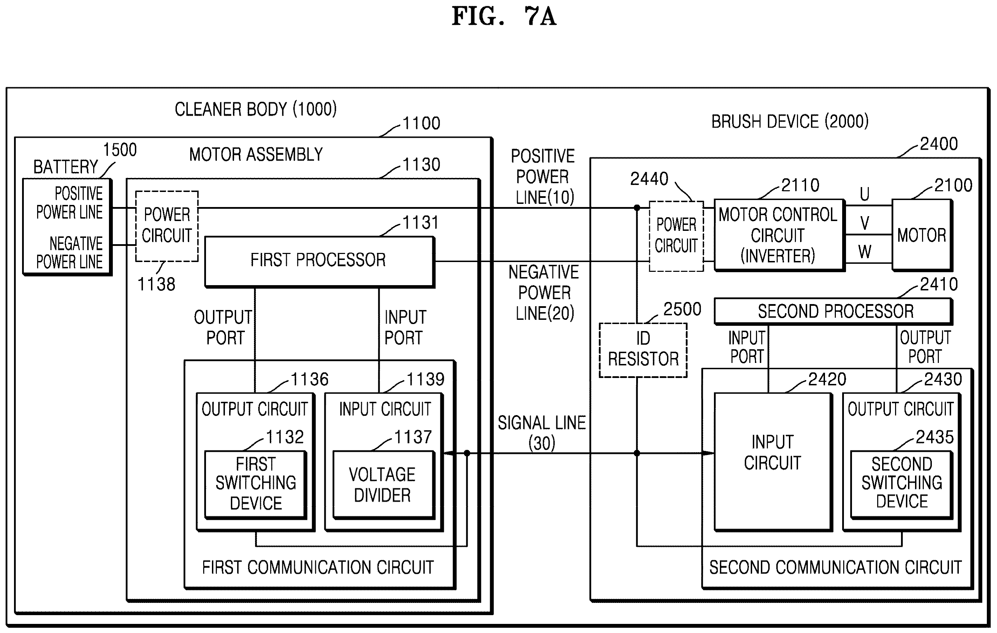

Referring to 420 of FIG. 4, the brush device 2000 may further include a driving circuit (PCB) 2400. The driving circuit 2400 may include the second processor 2410, a power circuit (not shown), a motor control circuit (e.g., an inverter) (not shown), etc., and the power circuit may include an inrush current reduction circuit 2450, a voltage detection circuit 2460, and a capacitor 2470, without being limited thereto. The driving circuit 2400 may include a circuit for signal line communication with the cleaner body 1000. For example, the driving circuit 2400 may include a switching device (hereinafter, referred to as a second switch) (not shown) connected to a signal line 30, an identification (ID) resistor (not shown) that indicates a type of the brush device 2000, etc. The driving circuit 2400 will be described later in detail with reference to FIGS. 7A to 7C.

The brush device 2000 may have various types. For example, the brush device 2000 may include a multi-brush 401, a floor brush 402, a wet mop brush 403, a turbo (carpet) brush 404, a bed cloth brush 405,, a crevice brush (not shown), a pet brush (not shown), etc., without being limited thereto.

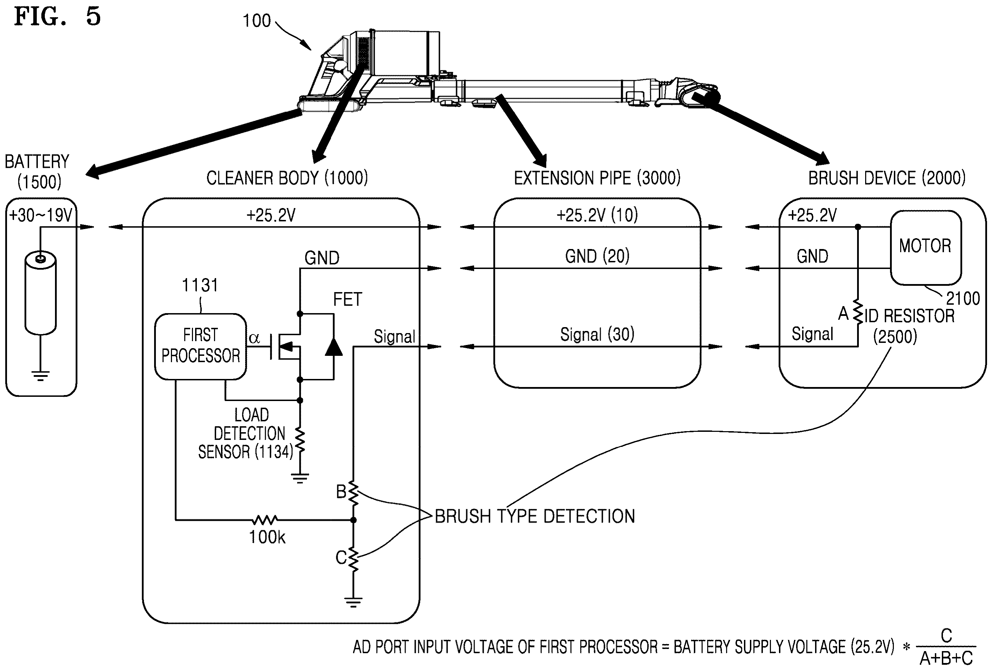

In an embodiment of the disclosure, a type of the brush device 2000 may be distinguished by the ID resistor included in the brush device 2000. How the cleaner body 1000 identifies a type of the brush device 2000 coupled to the wireless cleaner 100 will now be described in connection with FIG. 5.

FIG. 5 is a diagram for describing an operation of the cleaner body 1000 identifying a type of the brush device 2000, according to an embodiment of the disclosure.

Referring to FIG. 5, a cleaner body 1000 may include the first processor 1131 and the load detection sensor 1134 (e.g., a shunt resistor), and the brush device 2000 may include an ID resistor 2500. The ID resistor 2500 may be located between the power lines 10 and 20 and the signal line 30. The ID resistor 2500 indicates a type of the brush device 2000 and may differ by type of the brush device 2000. For example, the ID resistor 2500 of the multi-brush 401 (see FIG. 4) may have 330 KΩ, the ID resistor 2500 of the floor brush 402 (see FIG. 4) may have 2.2 MΩ, and the ID resistor 2500 of the turbo (carpet) brush 404 (see FIG. 4) may have 910 KΩ, but is not limited thereto.

The first processor 1131 may use the load detection sensor 1134 to detect whether the brush device 2000 is coupled or decoupled. For example, when the brush device 2000 is not coupled to the wireless cleaner 100 (e.g., a handy mode that is a mode of the cleaner body 1000 held by a user), an operation current of the brush device 2000 detected by the load detection sensor 1134 may be 0 (zero) A. On the other hand, when the brush device 2000 is coupled to the wireless cleaner 100 (e.g., a brush mode), an operation current of the brush device 2000 detected by the load detection sensor 1134 may be 50 mA or higher. **In** the case that the operation current of the brush device 2000 detected by the load detection sensor 1134 is 0 A, the first processor 1131 may determine that the brush device 2000 is decoupled, and in the case that the operation current of the brush device 2000 detected by the load detection sensor 1134 is at least 50 mA, the first processor 1131 may determine that the brush device 2000 is coupled. In one embodiment, a reference operation current value for determining that the brush device 2000 is coupled is not limited to 50 mA but may vary.

When it is determined that the brush device 2000 is coupled to the wireless cleaner 100, the first processor 1131 may identify a type of the brush device 2000 based on a voltage value input to the input port of the first processor 1131. For example, when the brush device 2000 includes an ID resistor A and the driving circuit 1130 of the cleaner body 1000 includes a voltage divider (resistor B and resistor C) connected to the signal line 30, a voltage input to the input port of the first processor 1131 may be as follows:

$$\text{AD Port input voltage} = \text{battery supply voltage} * \frac{C}{A + B + C}$$

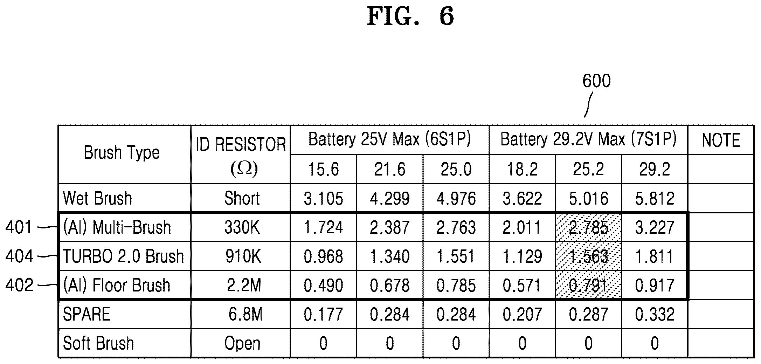

The voltage value input to the input port of the first processor 1131 may decrease with an increase in value of the ID resistor 2500. When the resistor B and the resistor C have constant values, the voltage value input to the input port varies by the value of the ID resistor A, so the first processor 1131 may identify a type of the brush device 2000 corresponding to the ID resistor 2500 based on the voltage value input to the input port. This will be described with reference to FIG. 6.

FIG. 6 is a table for describing the ID resistor of the brush device 2000, according to an embodiment of the disclosure.

Referring to table 600 of FIG. 6, the ID resistor of the multi-brush 401 may have 330 KΩ, the ID resistor of the floor brush 402 may have 2.2 MΩ, and the ID resistor of the turbo (carpet) brush 404 may have 910 KΩ. When the voltage of the battery 1500 is 25.2 V, the voltage value input to the input port of the first processor 1131 is 2.785 V when the multi-brush 401 is coupled to the wireless cleaner 100, the voltage value input to the input port of the first processor 1131 is 0.791 V when the floor brush 402 is coupled to the wireless cleaner 100, and the voltage value input to the input port of the first processor 1131 is 1.563 V when the turbo (carpet) brush 404 is coupled to the wireless cleaner 100. Accordingly, the first processor 1131 may determine that the brush device 2000 is coupled to the wireless cleaner 100, and when the voltage of the battery 1500 is 25.2 V, identify that the multi-brush 401 is coupled when the voltage value input to the input port is 2.785 V, identify that the floor brush 402 is coupled when the voltage value input to the input port is 0.791 V, and identify that the turbo (carpet) brush 404 is coupled when the voltage value input to the input port is 1.563 V.

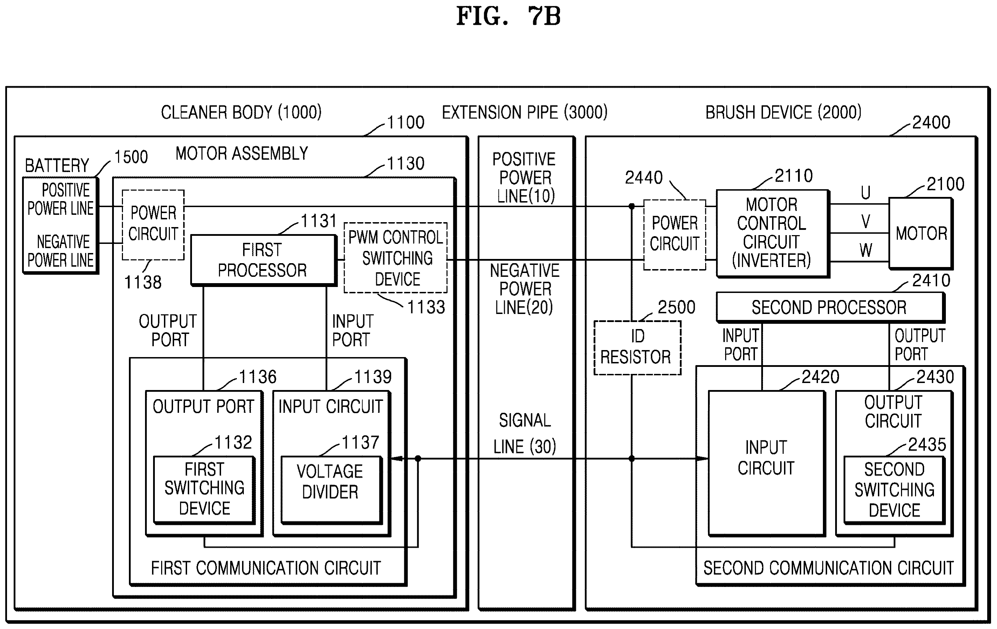

A configuration of the wireless cleaner 100 for signal line communication between the cleaner body 1000 and the brush device 2000 will now be described in connection with FIGS. 7A and 7B.

FIG. 7A is a block diagram for describing functions of the wireless cleaner 100 for signal line communication, according to an embodiment of the disclosure.

The driving circuit 1130 in the motor assembly 1100 for signal line communication may include the first processor 1131, an input circuit 1139, an output circuit 1136, a power circuit 1138, etc., without being limited thereto.

The input circuit 1139 is a circuit for identifying a type of the brush device 2000 through the ID resistor of the brush device 2000 or detecting (receiving) a second signal transmitted from the brush device 2000. The input circuit 1139 may include a voltage divider 1137 (hereinafter, also referred to as a first voltage divider). The voltage divider 1137 is configured to divide a voltage input to the input port of the first processor 1131 from the signal line 30. In the case that the input circuit 1139 includes the voltage divider 1137, even when a noise voltage is applied onto the signal line 30, the noise voltage may also be divided and input to the input port (e.g., analog to digital (AD) port or AD converter (ADC)) of the first processor 1131.

The output circuit 1136 is a circuit for transmitting the first signal to the brush device 200. The output circuit 1136 may include the first switching device 1132. The first switching device 1132 may be an FET or a BJT, which may make the voltage at the signal line 30 0 V (GND or low) through a switching operation.

The first processor 1131 may control the operation of the first switching device 1132 connected to the signal line 30 to transmit the first signal to the brush device 2000 through the signal line 30 and detect the second signal transmitted from the brush device 2000 through the signal line 30. The first processor 1131 may control the brush device 2000 by transmitting the first signal through the output circuit 1136. For example, the first processor 1131 may control the drum rpm, the trip level, etc., of the brush device 2000 by transmitting the first signal including data that indicates at least one of target rpm of the drum 2200 of the brush device 2000, a target trip level of the brush device 2000 or consumption power of the suction motor 1110 to the brush device 2000.

The power circuit 1138 may be a circuit connected to the battery 1500 to supply power to the motor assembly 1100. The power circuit 1138 may be a voltage drop converter, e.g., a DC/DC converter.

The driving circuit 2400 of the brush device 2000 for signal line communication may include the second processor 2410, an input circuit 2420, an output circuit 2430, a power circuit 2440, the ID resistor 2500, etc., without being limited thereto.

The input circuit 2420 is a circuit for detecting (receiving) the first signal transmitted from the cleaner body 1000. The input circuit 2420 may include a switching device (e.g., a positive-negative-positive (PNP) transistor, a P-channel FET, etc.), but is not limited thereto. The input circuit 2420 may include a second voltage divider.

The output circuit 2430 is a circuit for transmitting the second signal to the cleaner body 1000. The output circuit 2430 may include a second switching device 2435. The second switching device 2435 may be an FET or a BJT, which may make the voltage at the signal line 30 0 V (GND or low) through a switching operation.

The second processor 2410 may control the operation of the second switching device 2435 connected to the signal line 30 to transmit the second signal to the cleaner body 1000 through the signal line 30 and detect the first signal transmitted from the cleaner body 1000 through the signal line 30. The second processor 2410 may control the rpm of the drum 2200 to be the target rpm or control the trip level to be the target trip level, according to the first signal. Furthermore, when the first signal includes data for controlling the lighting device 2300 (see Fig, 4) included in the brush device 2000, the second processor 2410 may control the intensity of brightness or output of the lighting device 2300 based on the first signal. For example, when receiving the first signal indicating that the cleaner body 1000 has an error, the second processor 2410 may control the lighting device 2300 to change color to indicate the error of the cleaner body 1000. Also, the second processor 2410 may control the lighting device 2300 to output a color corresponding to the current usage environment condition (e.g., a state of the surface to be cleaned (floor, carpet, mat, corner, etc.), a state of being uplifted from the surface to be cleaned, etc.) of the brush device 2000. The second processor 2410 may change the color of the lighting device 2300 to a certain color (e.g., red) when a foreign substance is detected as being stuck in the drum 2200.

FIG. 7B is a block diagram for describing functions of the wireless cleaner 100 including the extension pipe 3000, according to an embodiment of the disclosure.

The driving circuit 1130 of the motor assembly 1100 shown in FIG. 7B may correspond to the driving circuit 1130 of the motor assembly 1100 as shown in FIG. 7A, and the driving circuit 2400 shown in FIG. 7B may correspond to the driving circuit 2400 as shown in FIG. 7A.

Referring to FIG. 7B, the cleaner body 1000 and the brush device 2000 may be physically connected through the extension pipe 3000. In this case, the extension pipe 3000 may include the positive (+) power line 10, the negative (-) power line 20 and the signal line 30. Accordingly, even when the cleaner body 1000 is connected to the brush device 2000 through the extension pipe 3000, the cleaner body 1000 and the brush device 2000 may stably perform the signal line communication.

In an embodiment of the disclosure, the motor assembly 1100 may include a switching device for controlling PWM to control the power of the battery 1500 supplied to the motor 2100 of the brush device 2000 (hereinafter, referred to as a PWM control switching device 1133). The PWM control switching device 1133 is a component for the first processor 1131 of the cleaner body 1000 to control power supply to the brush device 2000, and may also be referred to as a third switching device. The PWM control switching device 1133 may be an FET, but is not limited thereto.

In an embodiment of the disclosure, the first processor 1131 may control the PWM control switching device 1133 according to the type of the brush device 2000 to control power supply to the brush device 2000. For example, in a case that the brush device 2000 is the multi-brush 401 (see 420 of FIG. 4) including the driving circuit 2400, the first processor 1131 may continue to output a high signal to the PWM control switching device 1133 to keep supplying the power to the brush device 2000. In this case, the PWM control switching device 1133 maintains to be in an ON state, so the driving circuit 2400 of the brush device 2000 may keep receiving the power.

On the other hand, in a case that the brush device 2000 is a normal brush (see 410 of FIG. 4) that does not include the driving circuit 2400, the first processor 1131 may alternately output high and low signals to the PWM control switching device 1133 so that the PWM control switching device 1133 may alternately repeat ON and OFF states. In this case, the PWM control switching device 1133 may satisfy an output required for characteristics for each use of the brush device 2000 by controlling the power of the battery 1500 supplied to the motor 2100. Specifically, the first processor 1131 may control output power of the motor 2100 by controlling a duty value (hereinafter, also referred to as a duty) of the PWM control switching device 1133 to be high for a first brush device that requires high output to supply power to the first brush device and controlling a duty value to be low for a second brush device that requires low output to supply power to the second brush device. The duty value refers to a duty cycle of a pulse width when the intervals are regular, and may especially refer to a ratio of a section in which power is transmitted (on duty section) and a section in which power is blocked (off duty section). The larger the duty value, the longer the whole time for which current flows to the motor 2100, so average power supplied to the brush device 2000 may increase.

Furthermore, in the case of the wireless cleaner 100 to which the battery 1500 is applied, as the battery 1500 is discharged, voltage supplied from the battery 1500 tends to be reduced. When the motor 2100 of the brush device 2000 is driven at a constant duty value, voltage of the battery 1500 drops and the drum rpm of the brush device 200 is reduced over cleaning time. Hence, the first processor 1131 of the cleaning body 1000 may also control compensation for the rpm reduction of the drum of the brush device 2000 by increasing the duty value (the section in which power is applied by turning on the PWM control switching device 1133 during a single period) in response to the voltage drop of the battery 1500.

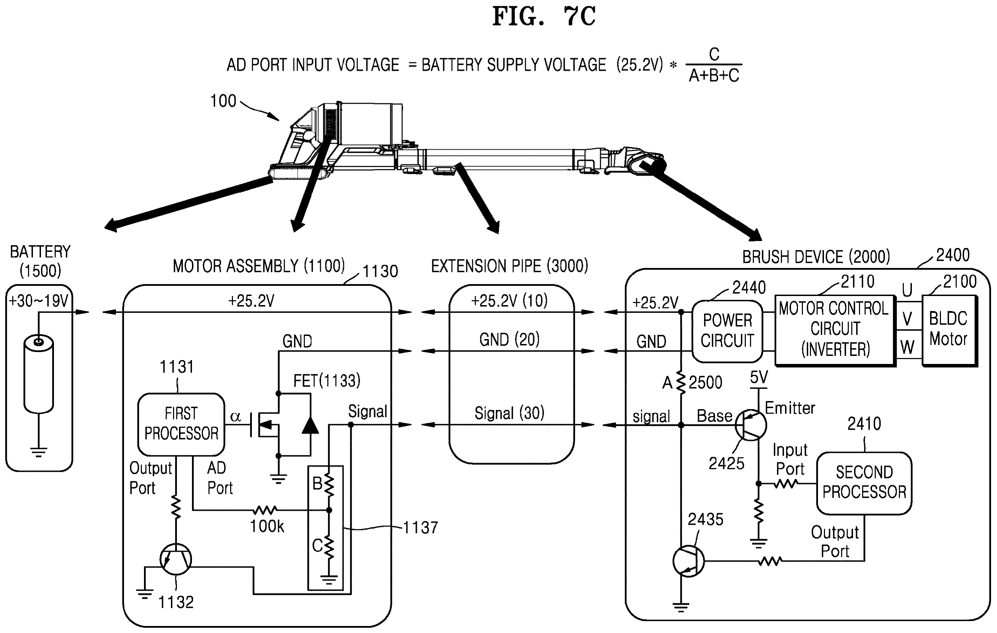

An embodiment where the wireless cleaner 100 includes the extension pipe 3000 and the cleaner body 1000 includes the PWM control switching device 1133 is used as an example for convenience of explanation, but the disclosure is not limited thereto. An example of a circuit for signal line communication of the wireless cleaner 100 will be described in detail in connection with FIG. 7C.

FIG. 7C is a diagram for describing a circuit for signal line communication of the wireless cleaner 100, according to an embodiment of the disclosure. In FIG. 7C, for convenience of explanation, an embodiment where A is 330 K$\Omega$, B is 330 K$\Omega$ and C is 82 K$\Omega$ will be described as an example.

The first processor 1131 may identify a type of the brush device 2000 based on a voltage input to the input port (AD port). For example, as the AD port input voltage of the first processor 1131 is

$$2.785 \text{ V} \left(= \text{ battery supply voltage} * \frac{C}{A+B+C}\right),$$ the first processor 1131 may identify that the multi-brush 401 having the ID resistor 2500 of 330 K$\Omega$ (A) corresponding to 2.785 V of the AD port input voltage is coupled (see table 600 of FIG. 6).

In the case that the brush device 2000 coupled to the wireless cleaner 100 is identified as the multi-brush 401 including the driving circuit 2400, the cleaner body 1000 may perform signal line communication with the brush device 2000.

The first processor 1131 of the cleaner body 1000 may receive a signal by using the input port and transmit a signal by using the output port. For example, when the first processor 1131 outputs a low signal through the output port, the first switching device 1132 may be turned off. As the first switching device 1132 is turned off, the voltage of the signal line 30 may get into a high state, which is about $14 \text{ V} \left(= \text{ battery supply voltage} * \frac{B+C}{A+B+C}\right).$ In the case that the voltage of the signal line 30 is about 14 V, it is higher than 5 V, so a PNP transistor 2425 may be turned off and a low (0 V) signal may be input to the input port of the second processor 2410. On the other hand, when the first processor 1131 outputs a high signal through the output port, the first switching device 1132 may be turned on. As the first switching device 1132 is turned on, the voltage of the signal line 30 may change to 0 V (GND) and get into a low state. In the case that the voltage of the signal line 30 is 0 V, the PNP transistor 2425 may be turned on and a high signal (about 4.8 V) may be input to the input port of the second processor 2410. That is, when the first processor 1131 outputs a low signal through the output port, a low signal may be input to the input port of the second processor 2410, and when the first processor 1131 outputs a high signal through the output port, a high signal may be input to the input port of the second processor 2410.

The second processor 2410 of the brush device 2000 may receive a signal by using the input port and transmit a signal by using the output port. For example, when the second processor 2410 outputs a high signal through the output port, the second switching device 2435 may be turned on. As the second switching device 2435 is turned on, the voltage of the signal line 30 may change to 0 V (GND) and get into a low state. In the case that the voltage of the signal line 30 is 0 V, a low signal (0 V) may be input to the input port of the first processor 1131. On the other hand, when the second processor 2410 outputs a low signal through the output port, the second switching device 2435 may be turned off. As the second switching device 2435 is turned off, the voltage of the signal line 30 may get into a high state, which is about

$$14 \text{ V} \left(= \text{ battery supply voltage} * \frac{B+C}{A+B+C}\right).$$ In the case that the voltage of the signal line 30 is about 14 V, 2.785 V may be input to the input port of the first processor 1131. In this case, as the driving circuit 1130 of the cleaner body 1000 includes the voltage divider 1137, the high voltage (14 V) of the signal line 30 is divided so that 2.785 V may be input to the input port of the first processor 1131. That is, when the second processor 2410 outputs a high signal through the output port, a low signal (0 V) may be input to the input port of the first processor 1131, and when the second processor 2410 outputs a low signal through the output port, 2.785 V (about 2.8 V) may be input to the input port of the first processor 1131.

Although an example in which the PNP transistor 2425 is included as a switching device in the driving circuit 2400 of the brush device 2000 is described in FIG. 7C, it is not limited thereto. For example, instead of the PNP transistor 2425, a P-channel FET switching device may be used.

In an embodiment of the disclosure, as the driving circuit 1130 for signal line communication of the cleaner body 1000 includes the voltage divider 1137, influences of noise on the signal line 30 may be minimized, thereby enabling reliable signal transmission when the first processor 1131 receives a signal from the second processor 2410.

In an embodiment of the disclosure, in the case that the brush device 2000 coupled to the wireless cleaner 100 is identified as the multi-brush 401 including the capacitor 2470, at least one processor (e.g., the main processor 1800 or the first processor 1131) of the cleaner body 1000 may keep turning on the PWM control switching device 1133 used to control power supply to the brush device 2000. For example, the first processor 1131 may continue to output a high signal to the PWM control switching device 1133 to keep supplying power to the brush device 2000. In this case, the PWM control switching device 1133 maintains to be in an ON state, so the brush device 2000 may keep receiving the power. The capacitor 2470 included in the brush device 2000 may be charged with the voltage applied to the brush device 2000 from the battery 1500.

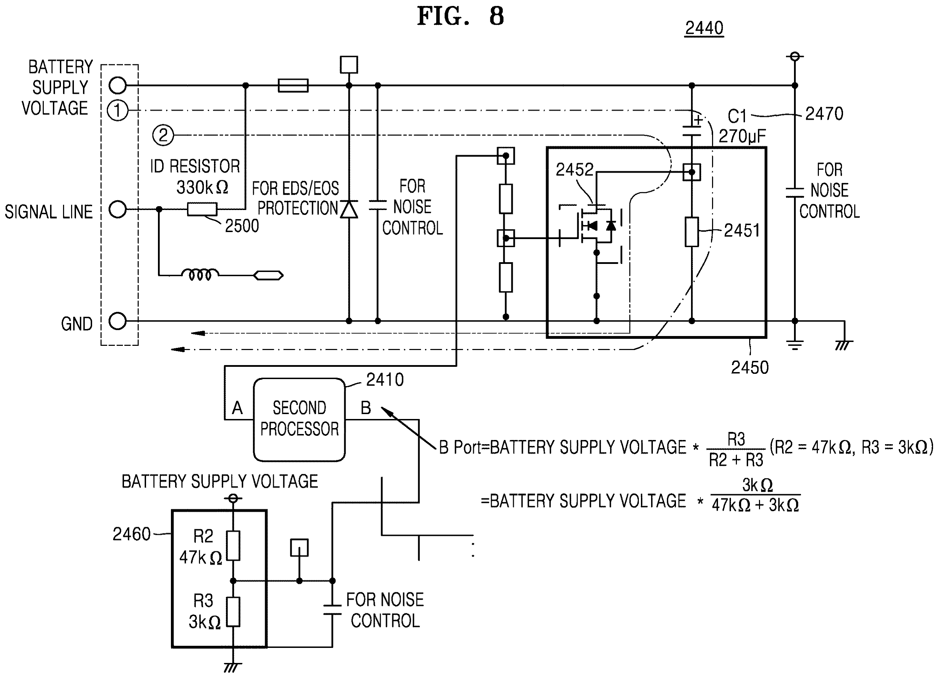

In the case that the brush device 2000 is the multi-brush 401 including the capacitor 2470, when the connector of the brush device 2000 is momentarily decoupled from the connector of the extension pipe 3000 and coupled back thereto (or when the connector of the cleaner body 1000 is momentarily decoupled from the connector of the extension pipe 3000 and coupled back thereto), the discharged capacitor 2470 is charged, causing a significant inrush current to the brush device 2000. Especially, by the nature of the brush device 2000, big and small shocks may be delivered to the brush device 2000 depending on the floor condition (e.g., length or density of carpet wool, a border point between the carpet and the floor, a door sill, an obstacle, etc.) or the usage condition (e.g., moving forward or backward of the brush), and when the connector gap increases, a phenomenon in which the connector of the brush device 2000 is momentarily decoupled from the connector of the extension pipe 3000 and coupled back thereto may occur frequently. Hence, to prevent frequent suspension of operation and product failure of the brush device 2000 due to the inrush current, the brush device 2000 may include the inrush current reduction circuit 2450 to reduce the inrush current. The power circuit 2440 of the brush device 2000 will now be described in detail in connection with FIG. 8.

FIG. 8 is a diagram for describing the power circuit 2440 of the brush device 2000, according to an embodiment of the disclosure.

Referring to FIG. 8, the power circuit 2440 of the brush device 2000 may include the inrush current reduction circuit 2450 and the voltage detection circuit 2460. Furthermore, the power circuit 2440 of the brush device 2000 may further include a capacitor for controlling noise, a diode for electrostatic discharge (ESD)/electrical over stress (EOS) protection, or the like.

The inrush current reduction circuit 2450 may include a resistor R1 2451 for reducing the inrush current that occurs when the capacitor C1 2470 is charged (hereinafter, also referred to as a first resistor or an inrush current reduction resistor), and a switching device 2452 (e.g., FET) used to control the inrush current. In this case, the inrush current reduction resistor R1 2451 may be arranged in parallel with the switching device 2452 and in series with the capacitor C1 2470.

Furthermore, a value of the inrush current reduction resistor R1 2451 may be determined by taking into account a supply voltage of the battery 1500 and a maximum threshold value of the inrush current.

As $I = V/R$, the inrush current I may be expressed as follows: inrush current I = (supply voltage - C1 charging voltage) / (R1 + values of the other resistors). In this case, the other resistors may include a PCB pattern resistor, a FET internal parasitic resistor, a wire resistor, a connector resistor, etc.

Assuming that the values of the other resistors are zero, the battery supply voltage is 30 V, a C1 initial charging voltage is 0 V, and R1=0 $\Omega$, the inrush current may be infinite (I = (30V - 0) / 0 = $\infty$). On the other hand, assuming that the values of the other resistors are zero, the battery supply voltage is 30 V, the C1 initial charging voltage is 0 V, and R1=15 $\Omega$, the inrush current may be 2 A (I = 30V/ 15$\Omega$= 2A).

Accordingly, when the maximum threshold value of the inrush current is set to 2 A, the resistor R1 2451 may be determined to have 15 $\Omega$, and when the maximum threshold value of the inrush current may be set to 1.5 A, the resistor R1 2451 may be determined to have 20 $\Omega$.

In one embodiment, the larger the value of the inrush current reduction resistor R1 2451, the lower the inrush current, but the longer the charging time of the capacitor C1. On the other hand, the smaller the value of the inrush current reduction resistor R1 2451, the higher the inrush current, but the shorter the charging time of the capacitor C1. Hence, in an embodiment of the disclosure, the value of the inrush current reduction resistor R1 2451 may be determined by taking into account the charging time of the capacitor C1 and the maximum threshold value of the inrush current. The value of the inrush current reduction resistor R1 2451 may be 5 to 50 $\Omega$, but is not limited thereto.

An embodiment where the capacitor C1 2470 has 270 $\mu$F and the inrush current reduction resistor R1 2451 has 15 $\Omega$ will be described as an example below, but the disclosure is not limited thereto.

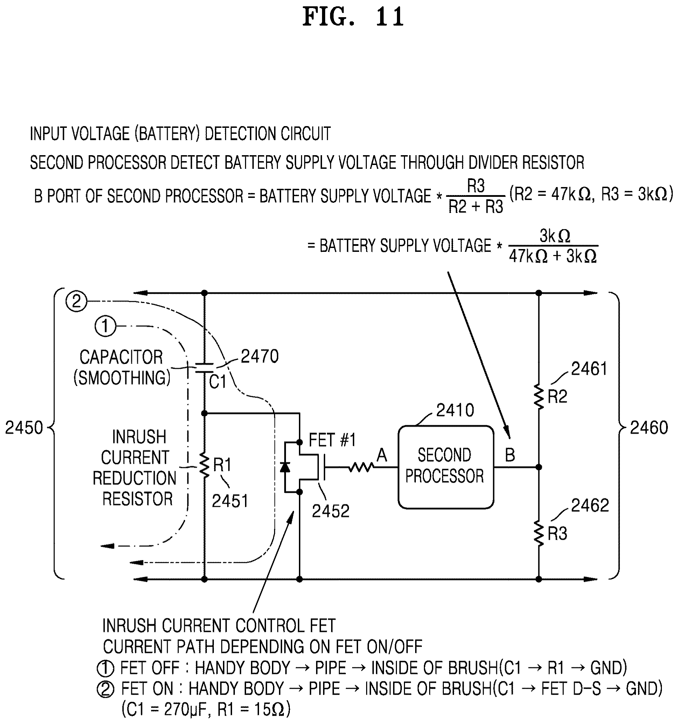

The switching device 2452 included in the inrush current reduction circuit 2450 may be connected to the second processor 2410. The second processor 2410 may output a signal to turn on or off the switching device 2452. Operation of the inrush current reduction circuit 2450 will be described later in more detail in connection with FIG. 11.

The voltage detection circuit 2460 may include a plurality of resistors (e.g., the second resistor R2 and the third resistor R3). The voltage detection circuit 2460 may be connected to the second processor 2410 of the brush device 2000. The second processor 2410 of the brush device 2000 may measure a battery supply voltage applied to the brush device

2000 from the battery 1500 based on a voltage value input to an input port B through the voltage detection circuit 2460. For example, a voltage value input to the input port B connected to the voltage detection circuit 2460 may be (battery supply voltage * (R3/(R2+R3))). Accordingly, as the battery supply voltage decreases, the voltage value input to the input port B of the second processor 2410 may decrease as well.

How the cleaner reduces the inrush current of the brush device 2000 by using the voltage detection circuit 2460 and the inrush current reduction circuit 2450 will now be described in detail in connection with FIG. 9.

FIG. 9 is a flowchart for describing a method of reducing an inrush current of a cleaner, according to an embodiment of the disclosure.

In operation S910, the cleaner according to an embodiment of the disclosure may measure, through the voltage detection circuit 2460, a voltage applied to the brush device 2000 from the battery 1500 (hereinafter, also referred to as a battery supply voltage). For example, the second processor 2410 of the brush device 2000 may monitor the battery supply voltage applied to the brush device 2000 during the cleaning operation.

Referring to FIG. 11, the voltage detection circuit 2460 may include the second resistor R2 and the third resistor R3. In this case, a voltage value input to the input port B of the second processor 2410 connected to the voltage detection circuit 2460 may be (battery supply voltage * (R3/(R2+R3))). For example, when R2 is 47kΩ and R3 is 3 kΩ, the voltage value input to the input port B of the second processor 2410 may be (battery supply voltage * (3 kΩ / (47 kΩ + 3kΩ)). When the battery supply voltage is 30 V, the voltage value input to the input port B may be 1.8 V, and when the battery supply voltage is 20 V, the voltage value input to the input port B may be 1.2 V. Hence, the second processor of the brush device 2000 may identify that the battery supply voltage applied to the brush device 2000 is 30 V when the voltage value input to the input port B is 1.8 V, and identify that the battery supply voltage applied to the brush device 2000 is 20 V when the voltage value input to the input port B is 1.2 V. An occasion when R2 is 47 kΩ and R3 is 3 kΩ will now be described as an example, but the disclosure is not limited thereto. Time constants of R2 and R3 are variable.

Returning to FIG. 9, in operation S920, the cleaner according to an embodiment of the disclosure may determine whether a drop rate of the voltage measured through the voltage detection circuit 2460 is at least a threshold rate.

The threshold rate may be a drop rate that is a basis to detect decoupling of the connector of the brush device 2000 from the extension pipe 3000 or the cleaner body 1000. The threshold rate may be a rate at which at least 1.5 V is dropped within one of 2 ms to 7 ms, but is not limited thereto. For example, the threshold rate may be a rate at which at least 1.5 V is dropped within 2 ms, a rate at which at least 1.5 V is dropped within 3 ms, a rate at which at least 1.5 V is dropped within 4 ms, a rate at which at least 1.5 V is dropped within 5 ms, a rate at which at least 1.5 V is dropped within 6 ms, a rate at which at least 1.5 V is dropped within 7 ms, a rate at which at least 2 V is dropped within 5 ms, a rate at which at least 3 V is dropped within 5 ms, etc. An embodiment where the threshold rate is the rate at which at least 1.5 V is dropped within 5 ms will now be described as an example, but the disclosure is not limited thereto.

In an embodiment of the disclosure, when the connector of the brush device 2000 is decoupled from the extension pipe 3000 or the cleaner body 1000 (or connectors between the extension pipe 3000 and the cleaner body 1000 are decoupled), the power supplied to the brush device 2000 may be rapidly reduced. In this case, the connector of the brush device 2000 may be decoupled from the extension pipe 3000 or the cleaner body 1000 momentarily or completely. When the connector of the brush device 2000 is decoupled from the extension pipe 3000 or the cleaner body 1000 (or the connectors between the extension pipe 3000 and the cleaner body 1000 are decoupled), power is blocked from being supplied to the brush device 2000, so the drop rate of the voltage measured by the second processor 2410 of the brush device 2000 through the voltage detection circuit 2460 may be at least the threshold rate.

In an embodiment of the disclosure, when the drop rate of the voltage measured through the voltage detection circuit 2460 is lower than the threshold rate in operation S920, it means that the connector of the brush device 2000 may be well connected to the extension pipe 3000 or the cleaner body 1000, so the second processor 2410 of the brush device 2000 may continue to monitor the battery supply voltage through the voltage detection circuit 2460. Then, the second processor 2410 of the brush device 2000 may keep the switching device 2452 of the inrush current reduction circuit 2450 in the ON state, having the current to be applied to the brush device 2000 flow through the switching device 2452 instead of the resistor 2451.

In operation S930, when the measured voltage drop rate is at least the threshold rate in operation S920, the cleaner may turn off the switching device 2452 included in the inrush current reduction circuit 2450.

When the drop rate of the voltage measured through the voltage detection circuit 2460 is at least the threshold rate (e.g., 1.5 V is dropped within 2 ms), it may indicate that the connector of the brush device 2000 may be decoupled from the extension pipe 3000 or the cleaner body 1000 momentarily or completely (or the connectors between the extension pipe 3000 and the cleaner body 1000 may be decoupled momentarily or completely). Accordingly, the second processor 2410 of the brush device 2000 may turn off the switching device 2452 included in the inrush current reduction circuit 2450.

In this case, when the connector of the brush device 2000 is coupled back to the extension pipe 3000 or the cleaner body 1000 and voltage is applied back to the brush device 2000 from the battery 1500, a current flows through the resistor 2451 included in the inrush current reduction circuit 2450 instead of the switching device 2452, thereby significantly reducing the inrush current.

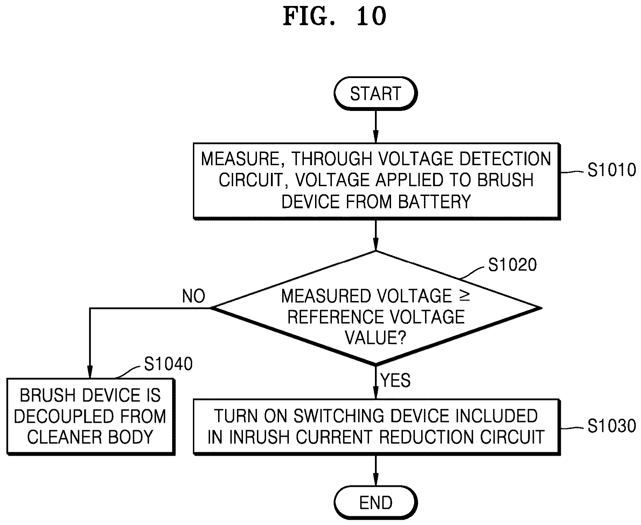

However, when the switching device 2452 is kept in the OFF state even after the capacitor 2470 is charged, the resistor 2451 included in the inrush current reduction circuit 2450 consumes the current so that a ripple current may increase due to the limit of charging/discharging current of the capacitor 2470. Hence, the brush device 2000 may need to switch the switching device 2452 from the OFF state to the ON state at an appropriate time for better smoothing in the capacitor 2470. How the brush device 2000 turns on the switching device 2452 at an appropriate time will now be described in connection with FIG. 10.

FIG. 10 is a flowchart for describing a method of turning on the switching device 2452 included in the inrush current reduction circuit 2450, according to an embodiment of the disclosure.

In operation S1010, the cleaner according to an embodiment of the disclosure may measure, through the voltage detection circuit 2460, a voltage applied to the brush device 2000 from the battery 1500.

In an embodiment of the disclosure, when the connector of the brush device 2000 is momentarily decoupled from the extension pipe 3000 or the cleaner body 1000 and coupled back thereto, power may be supplied back to the brush device 2000 from the battery 1500 and the second processor 2410 of the brush device 2000 may be activated. In this case, the second processor 2410 of the brush device 2000 may monitor, through the voltage detection circuit 2460, a value of the voltage applied to the brush device 2000 from the battery 1500. When the connector of the brush device 2000 is momentarily decoupled from the extension pipe 3000 or the cleaner body 1000 and coupled back thereto, the value of the voltage applied to the brush device 2000 may gradually increase.

In operation S1020, the cleaner may determine whether the voltage measured through the voltage detection circuit 2460 is at least a reference voltage value.

In an embodiment of the disclosure, the second processor 2410 of the brush device 2000 may determine whether the value of the voltage applied to the brush device 2000 may reach the reference voltage value. The reference voltage value may be a voltage value at a point where the inrush current does not increase significantly even when the switching device 2452 is turned on after the capacitor 2470 is nearly completely charged. For example, the reference voltage value may be 15 V to 25 V, but is not limited thereto.

The reference voltage value may be determined by considering a maximum output value (a voltage when the battery is fully charged) or a minimum output value (a voltage when the battery is completely discharged). For example, when the minimum output of the battery is 19 V, the reference voltage value may be 20 V, without being limited thereto. An embodiment where the reference voltage value is 20 V will now be described as an example.

In operation S1030, when the voltage measured through the voltage detection circuit 2460 is at least the reference voltage value in operation S1020, the cleaner may turn on the switching device 2452 included in the inrush current reduction circuit 2450.

For example, the second processor 2410 of the brush device 2000 may turn on the switching device 2452 included in the inrush current reduction circuit 2450 when the voltage measured through the voltage detection circuit 2460 reaches the reference voltage value. When the switching device 2452 is turned on, the current applied to the brush device 2000 may flow through the switching device 2452 instead of the inrush current reduction resistor 2451. As no current is consumed by the inrush current reduction resistor 2451, the function of the capacitor 2470 may be performed smoothly.

In operation S1040, when the brush device 2000 is separated from the cleaner body 1000, the voltage measured through the voltage detection circuit 2460 may not reach the reference voltage value.

When the user separates the brush device 2000 from the extension pipe 3000 or the cleaner body 1000 completely, no power is supplied back to the brush device 2000, so the voltage measured through the voltage detection circuit 2460 may not reach the reference voltage value within a certain period of time (e.g., 30 seconds) from when the switching device 2452 is turned off.

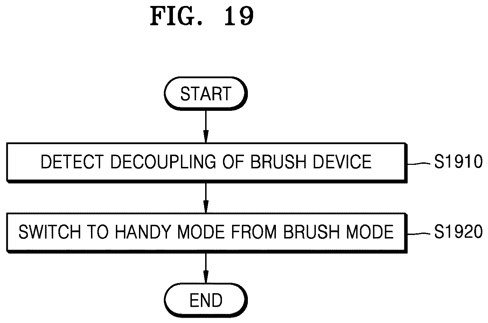

In an embodiment of the disclosure, the cleaner body 1000 may detect the separation of the brush device 2000 and change the operation mode from the brush mode to the handy mode. The operation of the cleaner body 1000 after detecting separation of the brush device 2000 will be described later in detail in connection with FIG. 19.

Operations of the inrush current reduction circuit 2450 and the voltage detection circuit 2460 will be described in more detail in connection with FIG. 11.

FIG. 11 is a diagram for describing the inrush current reduction circuit 2450 and the voltage detection circuit 2460, according to an embodiment of the disclosure.

Referring to FIG. 11, when the brush device 2000 is normally operating, the second processor 2410 may keep the switching device 2452 (FET #1) in the ON state. In this case, a current applied to the brush device 2000 from the cleaner body 1000 through the extension pipe 3000 may flow to the ground (GND) from the capacitor C1 2470 through the switching device 2452 (FET D-S) (path ②). As the internal resistor FET D-S of the switching device 2452 is nearly 0 ohm (e.g., 0.3 ohm), the switching device 2452 consumes very little current so that smoothing in the capacitor 2470 may be performed well.

When the connector of the brush device 2000 is decoupled from the extension pipe 3000 or the cleaner body 1000 (or the connectors between the extension pipe 3000 and the cleaner body 1000 are decoupled), the power supplied to the brush device 2000 may be rapidly reduced. In this case, the second processor 2410 of the brush device 2000 may detect through the voltage detection circuit 2460 that voltage drops at the threshold rate or higher (e.g., 1.5 V is dropped within 2 ms), and turn off the switching device 2452 included in the inrush current reduction circuit 2450. When the capacitor 2470 is completely discharged after the switching device 2452 is turned off, the second processor 2410 may be deactivated. When the capacitor 2470 is not completely discharged after the switching device 2452 is turned off, the second processor 2410 may remain in the activated state.

When the connector of the brush device 2000 is momentarily decoupled from the extension pipe 3000 or the cleaner body 1000 and coupled back thereto (or the connectors between the extension pipe 3000 and the cleaner body 1000 are momentarily decoupled and then coupled back), power may be supplied back to the brush device 2000. In this case, the switching device 2452 included in the inrush current reduction circuit 2450 is in the OFF state, so the current may flow through the inrush current reduction resistor R1 2451 instead of the switching device 2452. For example, the current applied to the brush device 2000 from the cleaner body 1000 through the extension pipe 3000 may flow to the ground (GND) from the capacitor C1 2470 through the inrush current reduction resistor R1 2451 (path ①). In this case, inrush current may be significantly reduced due to the inrush current reduction resistor R1 2451, thereby preventing damage to the components and suspension of operation of the brush device 2000.

When power is supplied back to the brush device 2000, the second processor that has been deactivated may be activated again. The activated second processor 2410 may monitor the battery supply voltage through the voltage detection circuit 2460 and when the battery supply voltage reaches the reference voltage value (e.g., 20 V), turn on the switching device 2452 included in the inrush current reduction circuit 2450. In other words, when the capacitor 2470 is charged to at least a certain level and no significant inrush current occurs, the second processor 2410 of the brush device 2000 may turn on the switching device 2452 to increase efficiency of the capacitor 2470, having a current flow through the switching device 2452 instead of the inrush current reduction resistor 2451. In this case, a current applied to the brush device 2000 from the cleaner body 1000 through the extension pipe 3000 may flow to the ground (GND) from the capacitor C1 2470 through the switching device 2452 (FET D-S) (path ②).

In an embodiment of the disclosure, the second processor 2410 of the brush device 2000 may perform ON/OFF control for the switching device 2452 included in the inrush current reduction circuit 2450 at an appropriate time based on the battery supply voltage, thereby significantly reducing the inrush current, preventing operation of the brush device 2000 from being suspended, and maximizing efficiency of the capacitor 2470.

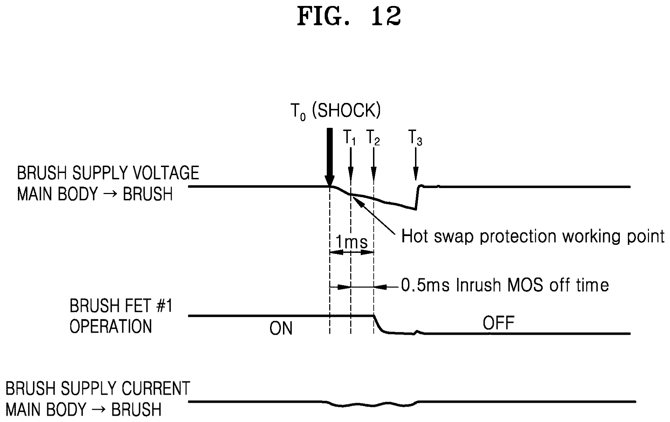

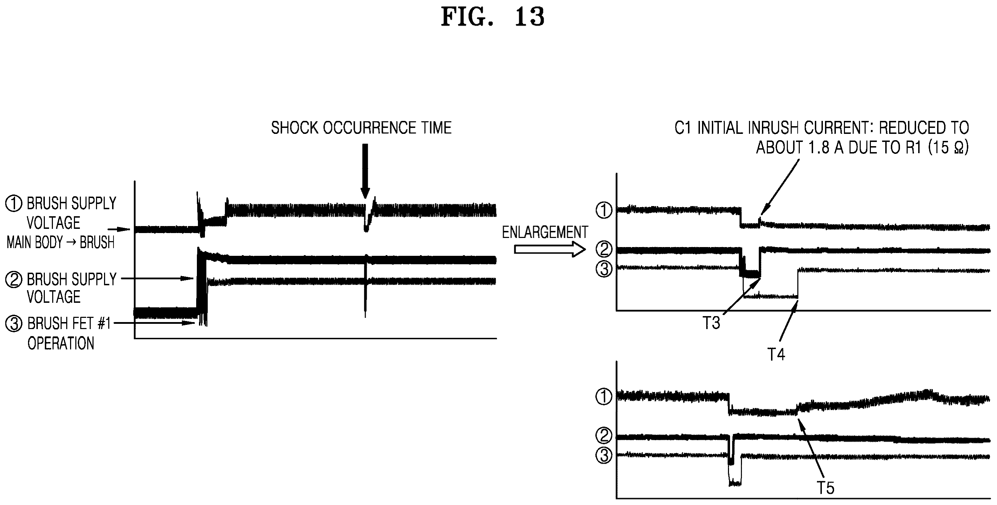

Effects of inrush current reduction according to an embodiment of the disclosure will now be described in detail in connection with FIGS. 12 and 13.

FIG. 12 is a diagram for describing an inrush current reduction effect, according to an embodiment of the disclosure. FIG. 13 is a diagram for describing an inrush current, according to an embodiment of the disclosure.

Referring to FIG. 12, at time $T_0$, a shock occurs to the brush device 2000 during a cleaning operation, causing the connector of the brush device 2000 to be momentarily decoupled from the extension pipe 3000. When the battery supply voltage drops to 26 V from 29.4 V within 5 ms at time $T_1$, the second processor 2410 of the brush device 2000 may determine that the connector of the brush device 2000 is decoupled from the extension pipe 3000 (or identify that a chattering phenomenon occurs). The second processor 2410 of the brush device 2000 may then turn off the switching device 2452 included in the inrush current reduction circuit 2450 at time $T_2$. When the connector of the brush device 2000 is detached from the extension pipe 3000, power supply to the brush device 2000 may be blocked so that the capacitor 2470 may be discharged and the motor 2100 of the brush device 200 may be stopped being driven. However, due to inertia, the drum rpm of the brush device 2000 may be slowly reduced.

When the connector of the brush device 2000 is momentarily decoupled from the extension pipe 3000 and coupled back thereto at time $T_3$, a voltage may be applied back to the brush device 2000. It is seen that even when the voltage is applied back to the brush device 2000, the switching device 2452 is in the OFF state, so the current flows through the inrush current reduction resistor 2451, preventing occurrence of a significant inrush current and allowing the brush device 2000 to operate normally.

Referring to FIG. 13, when the connector of the brush device 2000 is momentarily decoupled from the extension pipe 3000 and coupled back thereto, and thus, a voltage is applied back to the brush device 2000 at time $T_3$, the inrush current may be reduced to about 1.8 A due to the inrush current reduction resistor 2451. For example, assuming that the inrush current reduction resistor R1 2451 has 15 Ω, the other resistance components (a PCB pattern resistor, a wire resistor, a terminal connector resistor, a device parasitic resistor, etc.) has 1.67 Ω, the battery voltage is 30 V, and the capacitor C1 2470 is in the discharged state (C1 initial charging voltage is 0 V), an inrush current that occurs as the capacitor C1 is charged is as follows:

$$I = V / R = (\text{battery voltage 30 V} - \text{C1 charging voltage}) / (R1 + \text{the other resistance})$$

$$I = (30\ V - 0\ V) / (15\ \Omega + 1.67\ \Omega) = 1.8\ A$$

As the inrush current (1.8 A) flowing to the brush device 2000 is lower than a reference level (e.g., 4.9 A) at which to stop the brush device 2000, the cleaner body 1000 may not block the power supply to the brush device 2000.

In one embodiment, the second processor 2410 of the brush device 2000 may monitor the battery supply voltage and, when the battery supply voltage reaches the reference voltage value at time T4, turn back on the switching device 2452 included in the inrush current reduction circuit 2450. In other words, as almost none of inrush current occurs when the capacitor 2470 is almost completely charged, the second processor 2410 of the brush device 2000 may turn back on the switching device 2452.

In an embodiment of the disclosure, after the capacitor 2470 is completely charged at time T5, the second processor 2410 of the brush device 2000 may control an inverter to drive the motor 2100 again. In this case, the drum rpm that has been slowly reduced may return to the target rpm. Hence, in an embodiment of the disclosure, even when the connector of the brush device 2000 is momentarily decoupled from the extension pipe 3000 or the cleaner body 1000 and coupled back thereto, the drum rpm of the brush device 2000 does not change significantly, so the user may suppose that the brush device 2000 is operating normally.

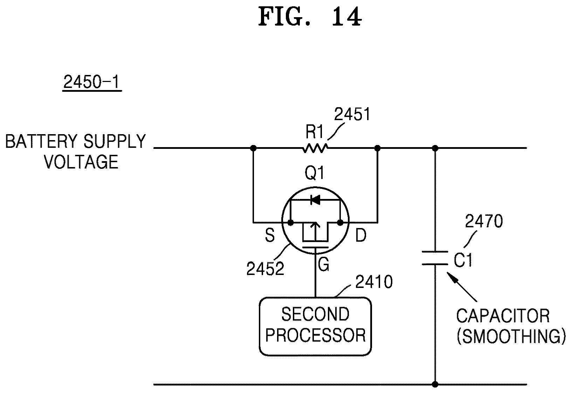

The inrush current reduction circuit 2450 may be designed in various ways. Various types of the inrush current reduction circuit 2450 will be described in detail in connection with FIGS. 14 to 17.

FIG. 14 is a diagram for describing an inrush current reduction circuit 2450-1, according to an embodiment of the disclosure.

The inrush current reduction circuit 2450-1 may be located at an upper end of the capacitor C1 2470. The inrush current reduction circuit 2450-1 may include the inrush current reduction resistor R1 2451 and the switching device Q1 2452. The inrush current reduction resistor R1 2451 and the switching device Q1 2452 may be arranged in parallel.

In an embodiment of the disclosure, the connector of the brush device 2000 may be momentarily detached from the extension pipe 3000 or the cleaner body 1000. In this case, the second processor 2410 of the brush device 2000 may identify that a drop rate of the voltage measured through the voltage detection circuit 2460 (e.g., 1.5 V is dropped for 3 ms) is at least the threshold rate (e.g., 1.5 V is dropped within 5 ms), and turn off the switching device Q1 2452 included in the inrush current reduction circuit 2450-1.

When the connector of the brush device 2000 is coupled back to the extension pipe 3000 or the cleaner body 1000, the switching device Q1 2452 is in the OFF state, so the current applied to the brush device 2000 may flow to the capacitor C1 2470 through the inrush current reduction resistor R1 2451. Accordingly, as the capacitor C1 2470 is charged or discharged through the inrush current reduction resistor R1 2451, the inrush current may be significantly reduced.

When the capacitor C1 2470 is nearly completely charged (e.g., the battery supply voltage reaches 20 V), the second processor 2410 of the brush device 2000 may turn back on the switching device Q1 2452. In this case, the current applied to the brush device 2000 may flow to the capacitor C1 2470 through the switching device Q1 2452 (e.g., FET D-S) instead of the inrush current reduction resistor R1 2451. As the internal resistor FET D-S of the switching device Q1 2452 is nearly 0 ohm, the switching device Q1 2452 consumes very little current so that smoothing in the capacitor C1 2470 may be performed well.

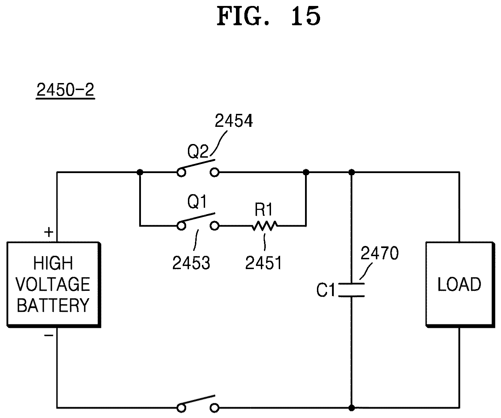

FIG. 15 is a diagram for describing an inrush current reduction circuit 2450-2, according to an embodiment of the disclosure.

The inrush current reduction circuit 2450-2 may be located at an upper end of the capacitor C1 2470. The inrush current reduction circuit 2450-2 may include the inrush current reduction resistor R1 2451, a first switching device Q1 2453, and a second switching device Q2 2454. The inrush current reduction resistor R1 2451 may be arranged in series with the first switching device Q1 2453 and in parallel with the second switching device Q2 2454.

In an embodiment of the disclosure, the connector of the brush device 2000 may be momentarily detached from the extension pipe 3000 or the cleaner body 1000. In this case, the second processor 2410 of the brush device 2000 may identify that a drop rate of the voltage measured through the voltage detection circuit 2460 (e.g., 1.5 V is dropped for 3 ms) is at least the threshold rate (e.g., 1.5 V is dropped within 5 ms), and turn off the second switching device Q2 2454 included in the inrush current reduction circuit 2450-2 and turn on the first switching device Q1 2453. Alternatively, when the second processor 2410 of the brush device 2000 that has been deactivated from suspension of power supply to the brush device 2000 is activated again, the second processor 2410 may turn off the second switching device Q2 2454 included in the inrush current reduction circuit 2450-2 and turn on the first switching device Q1 2453.

When the connector of the brush device 2000 is coupled back to the extension pipe 3000 or the cleaner body 1000, the second switching device Q2 2454 is in the OFF state and the first switching device Q1 2453 is in the ON state, so the current applied to the brush device 2000 may flow to the capacitor C1 2470 through the first switching device Q1 2453 and the inrush current reduction resistor R1 2451. Accordingly, as the capacitor C1 2470 is charged or discharged through the inrush current reduction resistor R1 2451, the inrush current may be significantly reduced.

When the capacitor C1 2470 is nearly completely charged (e.g., the battery supply voltage reaches 20 V), the second processor 2410 of the brush device 2000 may turn on the switching device Q2 2454 and turn off the first switching device Q1 2453. In this case, the current applied to the brush device 2000 may flow to the capacitor C1 2470 through the second switching device Q2 2454 (e.g., FET D-S) instead of the inrush current reduction resistor R1 2451. As the internal resistor FET D-S of the second switching device Q2 2454 is nearly 0 ohm, the second switching device Q2 2454 consumes no current so that smoothing in the capacitor 2470 may be performed well.

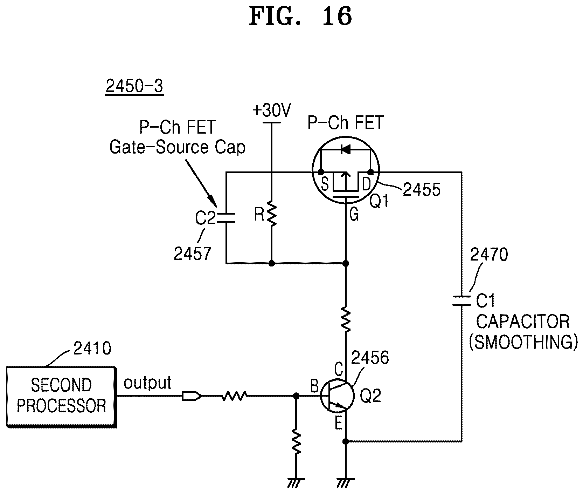

FIG. 16 is a diagram for describing an inrush current reduction circuit 2450-3, according to an embodiment of the disclosure.

The inrush current reduction circuit 2450-3 may include a first switching device Q1 2455, a second switching device Q2 2456 and a second capacitor C2 2457. The second capacitor C2 2457 may be added to be in parallel with a resistor R connected between gate (G) and source (S) of the first switching device Q1 2455. The first switching device Q1 2455 may be a P-channel FET, but is not limited thereto.

In an embodiment of the disclosure, the connector of the brush device 2000 may be momentarily detached from the extension pipe 3000 or the cleaner body 1000. In this case, the second processor 2410 of the brush device 2000 may identify that a drop rate of the voltage measured through the voltage detection circuit 2460 (e.g., 1.5 V is dropped for 3 ms) is at least the threshold rate (e.g., 1.5 V is dropped within 5 ms), and turn off the second switching device Q2 2456 included in the inrush current reduction circuit 2450-3. For example, when the second processor 2410 of the brush device 2000 turns off the second switching device Q2 2456 by outputting a low signal, the first switching device Q1 2455 may also be turned off as the second capacitor C2 2457 is discharged.

When the connector of the brush device 2000 is coupled back to the extension pipe 3000 or the cleaner body 1000 and thus, a voltage is applied back to the brush device 2000, the second processor 2410 of the brush device 2000 may turn on the second switching device Q2 2456. For example, the second processor 2410 may output a high signal to turn on the second switching device Q2 2456. When the second switching device Q2 2456 is turned on, the second capacitor C2 2457 may be slowly charged. As the second capacitor C2 2457 is charged, a voltage Vgs is slowly applied between the gate G and the source S of the first switching device Q1 2455, thereby slowly opening a source S - drain D channel of the first switching device Q1 2455. Accordingly, as the first capacitor C1 2470 is slowly charged, the inrush current in initial charging of the first capacitor C1 2470 may be reduced.

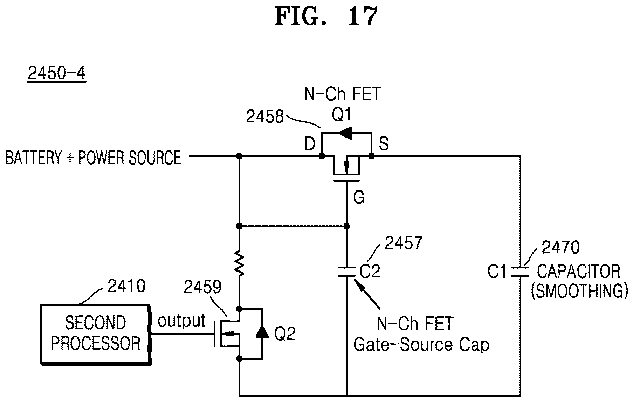

FIG. 17 is a diagram for describing an inrush current reduction circuit 2450-4, according to an embodiment of the disclosure.

The inrush current reduction circuit 2450-4 may include a first switching device Q1 2458, a second switching device Q2 2459 and a second capacitor C2 2457. The second capacitor C2 2457 may be connected between gate (G) and source (S) of the first switching device Q1 2458. The first switching device Q1 2458 may be N-channel FET, but is not limited thereto.

In an embodiment of the disclosure, the connector of the brush device 2000 may be momentarily detached from the extension pipe 3000 or the cleaner body 1000. In this case, the second processor 2410 of the brush device 2000 may identify that a drop rate of the voltage measured through the voltage detection circuit 2460 (e.g., 1.5 V is dropped for 3 ms) is at least the reference rate (e.g., 1.5 V is dropped within 5 ms), and turn off the second switching device Q2 2459 included in the inrush current reduction circuit 2450-4. For example, when the second processor 2410 of the brush device 2000 turns off the second switching device Q2 2459 by outputting a high signal, the first switching device Q1 2458 may also be turned off as the second capacitor C2 2457 is discharged.

When the connector of the brush device 2000 is coupled back to the extension pipe 3000 or the cleaner body 1000 and thus, a voltage is applied back to the brush device 2000, the second processor 2410 of the brush device 2000 may turn on the second switching device Q2 2459. For example, the second processor 2410 may output a low signal to turn on the second switching device Q2 2459. When the second switching device Q2 2459 is turned on, the second capacitor C2 2457 may be slowly charged. As the second capacitor C2 2457 is charged, a voltage Vgs is slowly applied between the gate G and the source S of the first switching device Q1 2458, thereby slowly opening a source S - drain D channel of the first switching device Q1 2458. Accordingly, as the first capacitor C1 2470 is slowly charged, the inrush current in initial charging of the first capacitor C1 2470 may be reduced.

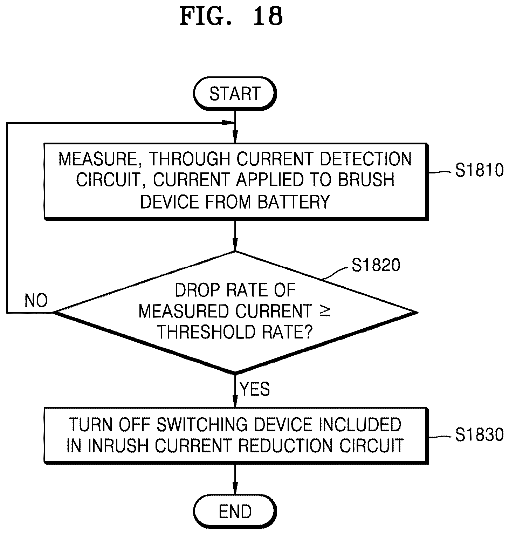

In one embodiment of the disclosure, ON and OFF control for the switching devices 2452, 2453, 2454, 2456, or 2459 included in the inrush current reduction circuit 2450, 2450-1, 2450-2, 2450-3 or 2450-4, respectively, may be performed based on the current instead of the voltage applied to the brush device 2000. How the cleaner reduces the inrush current based on the current applied to the brush device 2000 will now be described in detail in connection with FIG. 18.

FIG. 18 is a flowchart for describing a method of reducing an inrush current of a cleaner, according to an embodiment of the disclosure.

In operation S1810, the cleaner according to an embodiment of the disclosure may measure, through a current detection circuit, a current applied to the brush device 2000 from the battery 1500. For example, the second processor 2410 of the brush device 2000 may monitor a battery supply current applied to the brush device 2000 during a cleaning operation. When the brush device 2000 are normally operating, a current value measured through the current detection circuit may be about 0.5 A to 1 A, but is not limited thereto.

In an embodiment of the disclosure, the current flowing to the brush device 2000 is not large, the current detection circuit may include an operational amplifier (OP amp). The current detection circuit may also include a shunt resistor or the like.

In operation S1820, the cleaner may determine whether a drop rate of the current measured through the current detection circuit is at least a threshold rate.

The threshold rate may be a drop rate that is a basis to detect decoupling of the connector of the brush device 2000 from the extension pipe 3000 or the cleaner body 1000. For example, the threshold rate may be a rate at which at least 0.5 A is dropped within one of 2 ms to 5 ms, but is not limited thereto. An embodiment where the threshold rate is the rate at which at least 0.5 A is dropped within 3 ms will now be described as an example, but the disclosure is not limited thereto.

In an embodiment of the disclosure, when the connector of the brush device 2000 is decoupled from the extension pipe 3000 or the cleaner body 1000 (or connectors between the extension pipe 3000 and the cleaner body 1000 are decoupled), a current applied to the brush device 2000 may be 0 A from 0.5 A to 1 A. The connector of the brush device 2000 may be decoupled from the extension pipe 3000 or the cleaner body 1000 momentarily or completely. When the connector of the brush device 2000 is decoupled from the extension pipe 3000 or the cleaner body 1000 (or the connectors between the extension pipe 3000 and the cleaner body 1000 are decoupled), the current flowing to the brush device 2000 immediately becomes 0 A, so the drop rate of the current measured by the second processor 2410 of the brush device 2000 through the current detection circuit may be at least the threshold rate (e.g., the current drops 0.5 A within 3 ms).

In an embodiment of the disclosure, when the drop rate of the current measured through the current detection circuit is lower than the threshold rate in operation S1820, it means that the connector of the brush device 2000 may be well connected to the extension pipe 3000 or the cleaner body 1000, so the second processor 2410 of the brush device 2000 may continue to monitor the current to the brush device 2000 through the current detection circuit. The second processor 2410 of the brush device 2000 may keep the switching device 2452 of the inrush current reduction circuit 2450 in the ON state, having the current applied to the brush device 2000 flow through the switching device 2452 instead of the resistor 2451.

In operation S1830, when the measured current drop rate is at least the threshold rate in operation S1820, the cleaner may turn off the switching device 2452 included in the inrush current reduction circuit 2450.

When the drop rate of the current measured through the current detection circuit is at least the threshold rate (e.g., 0.5 A is dropped within 3 ms), it may indicate that the connector of the brush device 2000 may be decoupled from the extension pipe 3000 or the cleaner body 1000 momentarily or completely (or the connectors between the extension pipe 3000 and the cleaner body 1000 may be decoupled momentarily or completely). Accordingly, the second processor 2410 of the brush device 2000 may turn off the switching device 2452 included in the inrush current reduction circuit 2450.

In this case, when the connector of the brush device 2000 is coupled back to the extension pipe 3000 or the cleaner body 1000 and voltage is applied back to the brush device 2000 from the battery 1500, the current flows through the resistor 2451 included in the inrush current reduction circuit 2450 instead of the switching device 2452.

However, when the switching device 2452 is kept in the OFF state even after the capacitor 2470 is charged, the resistor 2451 included in the inrush current reduction circuit 2450 consumes the current so that a ripple current may increase due to the limit of charging/discharging current of the capacitor 2470.

Accordingly, when power is supplied back to the brush device 2000 and the second processor 2410 of the brush device 2000 is activated as the connector of the brush device 2000 is momentarily decoupled from the extension pipe 3000 or the cleaner body 1000 and coupled back thereto, the second processor 2410 may turn on the switching device 2452 at an appropriate time while monitoring the current value applied to the brush device 2000.

For example, the second processor 2410 of the brush device 2000 may determine whether the current value applied to the brush device 2000 reaches a reference current value. The reference current value may be a current value at a point where the inrush current does not increase significantly even when the switching device 2452 is turned on after the capacitor 2470 is nearly completely charged. For example, the reference current value may be 0.2 A, but is not limited thereto.

The second processor 2410 of the brush device 2000 may turn on the switching device 2452 included in the inrush current reduction circuit 2450 when the current value applied to the brush device 2000 reaches the reference current value. When the switching device 2452 is turned on, the current applied to the brush device 2000 may flow through the switching device 2452 instead of the inrush current reduction resistor 2451. As no current is consumed by the inrush current reduction resistor 2451, the function of the capacitor 2470 may be performed smoothly.

An operation of controlling ON/OFF of the switching device 2452 included in the inrush current reduction circuit 2450 based on the voltage applied to the brush device 2000 is described in connection with FIGS. 9 and 10 and an operation of controlling ON/OFF of the switching device 2452 included in the inrush current reduction circuit 2450 based on the current applied to the brush device 2000 is described in connection with FIG. 18, but the disclosure is not limited thereto.

In an embodiment of the disclosure, the second processor 2410 of the brush device 2000 may perform ON/OFF control of the switching device 2452 by taking into account both the voltage detected through the voltage detection circuit 2460 and the current detected through the current detection circuit. For example, the second processor 2410 of the brush device 2000 may turn off the switching device 2452 when the drop rate of the voltage detected through the voltage detection circuit 2460 is at least the threshold rate and the drop rate of the current detected through the current detection circuit is at least the threshold rate. The second processor 2410 of the brush device 2000 may turn on the switching device 2452 when power is supplied back to the brush device 2000, the voltage detected through the voltage detection circuit 2460 reaches the reference voltage value and the current detected through the current detection circuit reaches the reference current value.

In one embodiment, in a case that the brush device 2000 is completely separated from the cleaner body 1000, the voltage measured through the voltage detection circuit 2460 may not reach the reference voltage value or the current measured through the current detection circuit may not reach the reference current value within a certain time after the switching device 2452 is turned off. An embodiment where the brush device 2000 is completely separated from the cleaner body 1000 will now be described in detail in connection with FIG. 19.

FIG. 19 is a flowchart for describing a method of switching an operation mode of the cleaner, according to an embodiment of the disclosure.

In operation S1910, the cleaner body 1000 may detect separation of the brush device 2000 during a cleaning operation.

In an embodiment of the disclosure, the cleaner body 1000 may detect whether the brush device 2000 is coupled or decoupled by using the load detection sensor 1134. For example, when the brush device 2000 is not coupled to the wireless cleaner 100, an operation current of the brush device 2000 detected by the load detection sensor 1134 may be 0 (zero) A. On the other hand, when the brush device 2000 is coupled to the wireless cleaner 100, an operation current of the brush device 2000 detected by the load detection sensor 1134 may be 50 mA or higher. Hence, the cleaner body 1000 may detect that the brush device 2000 is decoupled from the wireless cleaner 100 when the operation current of the brush device 2000 detected by the load detection sensor 1134 during the cleaning operation is 0 A.

In an embodiment of the disclosure, the cleaner body 1000 may detect whether the brush device 2000 is coupled to or decoupled from the wireless cleaner 100 based on the voltage value input to the input port of the first processor 1131 through the signal line 30 (hereinafter, referred to as an input voltage value). For example, when the brush device 2000 is not coupled to the wireless cleaner 100, the input voltage value may be 0 (zero) V. On the other hand, when the brush device 2000 is coupled to the wireless cleaner 100, the input voltage value may be higher than 0 V, and may vary by the type of the brush device 2000. For example, in a case that the battery voltage is 25.2 V, the input voltage value may be 2.785 V when the multi-brush 401 is coupled to the cleaner body 1000, and the input voltage value may be 0.791 V when the floor brush 402 is coupled to the cleaning body 1000. Hence, when the voltage value input to the input port of the first processor 1131 through the signal line 30 during the cleaning operation is changed to 0 V, the cleaner body 1000 may determine that the brush device 2000 is decoupled from the wireless cleaner 100.

In operation S1920, the cleaner body 1000 may switch the brush mode to the handy mode.

In an embodiment of the disclosure, when detecting the decoupling of the brush device 2000 during the cleaning operation, the cleaner body 1000 may switch the operation mode from the brush mode to the handy mode.

The brush mode 1202 may be a mode in which cleaning is performed with the brush device 2000 coupled to the cleaner body 1000. The handy mode 1201 may be a mode in which cleaning is performed with the cleaner body 1000 when the brush device 2000 is decoupled.

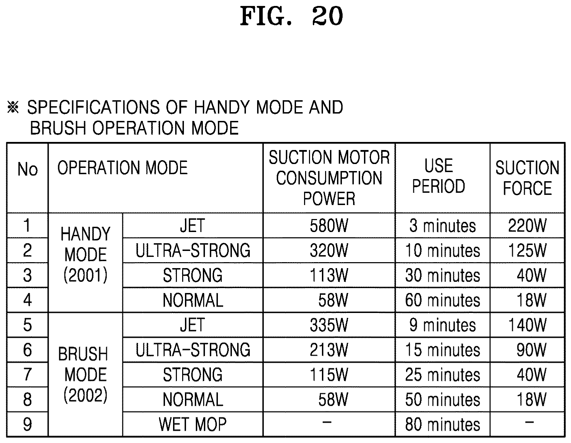

Referring to FIG. 20, in the same suction force mode, the handy mode may be operated at higher suction force than in the brush mode. For example, a jet mode may be set for the wireless cleaner 100. In this case, the wireless cleaner 100 may generate a suction force of 220 W by driving the suction motor 1110 at a consumption power of 580 W in the handy mode 2001, but may generate a suction force of 140 W by driving the suction motor 1110 at a consumption power of 335 W in the brush mode 2002.

According to an embodiment of the disclosure, a cleaner for reducing the inrush current that occurs to the brush device 2000 as the brush device 2000 is momentarily decoupled from the extension pipe 3000 or the cleaner body 1000 and coupled back thereto may be provided. Technological objectives of the disclosure are not limited to what are mentioned above, and throughout the specification, it will be clearly appreciated by those of ordinary skill in the art that there may be other technological objectives unmentioned.

The cleaner according to an embodiment of the disclosure may include the cleaner body 1000 including the battery 1500, and the brush device 2000 connected to the cleaner body 1000 directly or through the extension pipe 3000. The brush device 2000 may include the voltage detection circuit 2460 for measuring a voltage applied to the brush device 2000 from the battery 1500, the capacitor 2470 charged with the voltage applied to the brush device 2000, the inrush current reduction circuit 2450 including the resistor 2451 for reducing the inrush current that occurs in charging the capacitor 2470 and the switching device 2452 used to control the inrush current, and the processor 2410 for turning off the switching device 2452 included in the inrush current reduction circuit 2450 when a drop rate of the voltage measured through the voltage detection circuit 2460 is at least the threshold rate. According to an embodiment of the disclosure, an inrush current may be significantly reduced because the current flows through the resistor 2451 for reducing the inrush current when the voltage is applied back to the brush device 2000 and the capacitor 2470 is charged.

In an embodiment of the disclosure, the processor 2410 of the brush device 2000 may turn off the switching device 2452, and then turn on the switching device 2452 when a voltage measured through the voltage detection circuit 2460 reaches the reference voltage value. **In** an embodiment of the disclosure, when the capacitor 2470 is almost completely charged and thus, almost none of the inrush current occurs, the switching device 2452 may be turned on, enabling smoothing in the capacitor 2470 to be performed well.

In an embodiment of the disclosure, the reference voltage value may include a voltage value at a time when the capacitor 2470 is charged to at least a certain level, and may be determined by taking into account a minimum output value of the battery 1500.

In an embodiment of the disclosure, the reference voltage value may be 15 V to 25 V.

In an embodiment of the disclosure, the resistor 2451 for reducing the inrush current may be arranged in parallel with the switching device 2452 and in series with the capacitor 2470. According to an embodiment of the disclosure, as the current flows through the switching device 2452 when the switching device 2452 is turned on and the current flows through the resistor 2451 when the switching device 2452 is turned off, the inrush current may be reduced.

In an embodiment of the disclosure, a value of the resistor 2451 for reducing the inrush current may be determined by taking into account a supply voltage of the battery 1500 and a maximum threshold value of the inrush current. When the resistor 2451 for reducing the inrush current has a large value, the inrush current may decrease but a charging period of the capacitor 2470 may increase. On the other hand, when the resistor 2451 for reducing the inrush current has a small value, a charging period of the capacitor 2470 may decrease but the inrush current may increase. Hence, a value of the resistor 2451 for reducing the inrush current may be determined by taking into account a supply voltage of the battery 1500, a maximum threshold value of the inrush current, a charging period of the capacitor 2470, etc.

A value of the resistor 2451 for reducing the inrush current according to an embodiment of the disclosure may be 5 $\Omega$ to 50 $\Omega$.

In an embodiment of the disclosure, the threshold rate may be a rate at which at least 1.5 V is dropped within one of 2 ms to 7 ms. In an embodiment of the disclosure, the second processor 2410 of the brush device 2000 may determine that chattering occurs when the battery supply voltage drops about 1.5 V within a short period, and immediately turn off the switching device 2452 to reduce the inrush current.

According to an embodiment of the disclosure, the cleaner body 1000 may include a PWM control switching device 1133 used to control power supply to the brush device 2000, a load detection sensor 1134 for detecting a load of the brush device 2000, and at least one processor for controlling the PWM control switching device 1133 to block the power supply to the brush device 2000 when a load value of the brush device 2000 measured through the load detection sensor 1134 reaches a reference load value for suspending operation of the brush device 2000. According to an embodiment of the disclosure, the cleaner body 1000 may protect the brush device 2000 by blocking power supply to the brush device 2000 when the load value of the brush device 2000 measured through the load detection sensor 1134 reaches the reference load value.

In an embodiment of the disclosure, the brush device 2000 may include the ID resistor 2500 that indicates a type of the brush device 2000. According to an embodiment of the disclosure, the cleaner body 1000 may easily figure out the type of the brush device 2000 by using the ID resistor 2500.

In an embodiment of the disclosure, the ID resistor 2500 may be located between the power lines 10 and 20 and the signal line 30 in the brush device 2000. In an embodiment of the disclosure, the voltage value input to the input port of the at least one processor of the cleaner body 1000 may decrease with an increase in value of the ID resistor 2500. According to an embodiment of the disclosure, the voltage value input to the input port of the at least one processor of the cleaner body 1000 may vary by the type of the brush device 2000 connected to the cleaner body 1000.

In an embodiment of the disclosure, the at least one processor of the cleaner body 1000 may determine a type of the brush device 2000 including the ID resistor 2500 corresponding to the voltage value input to the input port through the signal line 30. The at least one processor of the cleaner body 1000 may keep the PWM control switching device 1133 used to control power supply to the brush device 2000 in the ON state when the determined type of the brush device 2000 is the brush device 2000 including the capacitor 2470. In an embodiment of the disclosure, when the brush device 2000 coupled to the cleaner body 1000 includes the driving circuit 2400, the PWM control switching device 1133 may be kept in the ON state to continue to supply the power.

In an embodiment of the disclosure, the at least one processor of the cleaner body 1000 may detect decoupling of the brush device 2000 from the cleaner body 1000 by using the voltage value input to the input port of the at least one processor through the load detection sensor 1134 or the signal line 30. The at least one processor of the cleaner body 1000 may switch the operation mode of the cleaner body 1000 from the brush mode to the handy mode as the brush device 2000 is decoupled from the cleaner body 1000. According to an embodiment of the disclosure, the cleaner body 1000 may increase suction force when the brush mode is switched to the handy mode.

In an embodiment of the disclosure, the brush device 2000 may include the current detection circuit for measuring a current applied to the brush device 2000 from the battery 1500. In an embodiment of the disclosure, the processor 2410 of the brush device 2000 may turn off the switching device 2452 included in the inrush current reduction circuit 2450 when a drop rate of the current measured through the current detection circuit is at least the threshold rate. According to an embodiment of the disclosure, the inrush current may be significantly reduced because the current flows through the resistor 2451 for reducing the inrush current when the voltage is applied back to the brush device 2000 and the capacitor 2470 is charged

In an embodiment of the disclosure, the threshold rate may be a rate at which the current drops at least 0.5 A within one of 2 ms to 5 ms. In an embodiment of the disclosure, the second processor 2410 of the brush device 2000 may determine that chattering occurs when the battery supply current drops about 0.5 A within a short period, and immediately turn off the switching device 2452 to reduce the inrush current.

In an embodiment of the disclosure, the brush device 2000 may include a communication circuit for communicating with the cleaner body 1000 through the signal line 30. **In** an embodiment of the disclosure, the brush device 2000 may send status information of the brush device 2000 to the cleaner body 1000 or receive a control signal from the cleaner body 1000 by freely communicating with the cleaner body 1000.

A method of reducing an inrush current of a cleaner according to an embodiment of the disclosure may include measuring, by the processor 2410 of the brush device 2000 through the voltage detection circuit 2460, a voltage applied to the brush device 2000 from the battery 1500, determining, by the processor 2410 of the brush device 2000, whether a drop rate of the voltage measured through the voltage detection circuit 2460 is at least a threshold rate, and turning off, by the processor 2410 of the brush device 2000, the switching device 2452 included in the inrush current reduction circuit 2450 based on the drop rate of the voltage measured through the voltage detection circuit 2460 being at least the threshold rate. According to an embodiment of the disclosure, an inrush current may be significantly reduced because the current flows through the resistor 2451 for reducing the inrush current when the voltage is applied back to the brush device 2000 and the capacitor 2470 is charged.

In an embodiment of the disclosure, the method may include turning off the switching device 2452, by the processor 2410 of the brush device 2000, and then turning on the switching device 2452, by the processor 2410 of the brush device 2000, when the voltage measured through the voltage detection circuit 2460 reaches the reference voltage value. In an embodiment of the disclosure, when the capacitor 2470 is almost completely charged and thus, almost none of the inrush current occurs, the switching device 2452 may be turned on, enabling smoothing in the capacitor 2470 to be performed well.

In an embodiment of the disclosure, the inrush current reduction circuit 2450 may include the resistor 2451 for reducing an inrush current which occurs in charging the capacitor 2470 and the switching device 2452 used to control the inrush current. **In** an embodiment of the disclosure, the resistor 2451 for reducing the inrush current may be arranged in parallel with the switching device 2452 and in series with the capacitor 2470. According to an embodiment of the disclosure, as the current flows through the switching device 2452 when the switching device 2452 is turned on and the current flows through the resistor 2451 when the switching device 2452 is turned off, the inrush current may be reduced.

In an embodiment of the disclosure, a value of the resistor 2451 for reducing the inrush current may be determined by taking into account a supply voltage of the battery 1500 and a maximum threshold value of the inrush current. When the resistor 2451 for reducing the inrush current has a large value, the inrush current may decrease but a charging period of the capacitor 2470 may increase. On the other hand, when the resistor 2451 for reducing the inrush current has a small value, a charging period of the capacitor 2470 may decrease but the inrush current may increase. Hence, a value of the resistor 2451 for reducing the inrush current may be determined by taking into account a supply voltage of the battery 1500, a maximum threshold value of the inrush current, a charging period of the capacitor 2470, etc.

In an embodiment of the disclosure, the threshold rate may be a rate at which at least 1.5 V is dropped within one of 2 ms to 7 ms. In an embodiment of the disclosure, the second processor 2410 of the brush device 2000 may determine that chattering occurs when the battery supply voltage drops about 1.5 V within a short period, and immediately turn off the switching device 2452 to reduce the inrush current.

In an embodiment of the disclosure, the method may include turning off the switching device 2452 included in the inrush current reduction circuit 2450 when a drop rate of the current measured through the current detection circuit is at least the threshold rate.

In an embodiment of the disclosure, the brush device 2000 may include the ID resistor 2500 for indicating a type of the brush device 2000.

In an embodiment of the disclosure, the brush device 2000 may include a communication circuit for communicating with the cleaner body 1000 through the signal line 30. In an embodiment of the disclosure, the brush device 2000 may send status information of the brush device 2000 to the cleaner body 1000 or receive a control signal from the cleaner body 1000 by freely communicating with the cleaner body 1000.

In an embodiment of the disclosure, the brush device 2000 may include a lighting device 2300 that is controlled by the processor.

In an embodiment of the disclosure, the processor may control a brightness or color of an output of the lighting device 2300 based on a state of operation of the cleaner.

In an embodiment of the disclosure, the brush device 2000 may be coupled directly to the cleaner body 1000.

In an embodiment of the disclosure, the brush device 2000 may be coupled to the cleaner body 1000 via one or more extension pipes 3000.

In an embodiment of the disclosure, the brush device 2000 may include an identification resistor 2500 that indicates a type of the brush device 2000.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a machine-readable storage medium (e.g., a compact disc read only memory (CD-ROM) or a universal serial bus (USB) flash drive) or distributed directly between two user devices (e.g., smart phones) or online (e.g., downloaded or uploaded). In the case of the online distribution, at least part of the computer program product (e.g., a downloadable app) may be at least temporarily stored or arbitrarily created in a storage medium that may be readable to a device such as a server of the manufacturer, a server of the application store, or a relay server.

## Claims

1. A cleaner comprising:

   a cleaner body (1000) including a battery (1500); and
   a brush device (2000) coupled to the cleaner body (1000) ,wherein the brush device (2000) comprises:

   a voltage detection circuit(2460) configured to measure a voltage applied to the brush device (2000) from the battery (1500);
   a capacitor (2470) charged with the voltage applied to the brush device (2000) from the battery (1500);
   an inrush current reduction circuit (2450) including a resistor (2451) configured to reduce an inrush current which occurs in charging the capacitor (2470) and a switching device (2452) used to control the inrush current; and
   a processor (2410) configured to turn off the switching device (2452) included in the inrush current reduction circuit (2450) based on a drop rate of the voltage measured through the voltage detection circuit (2460) being at least a threshold rate.

2. The cleaner of claim 1, wherein the processor (2410) is configured to turn off the switching device (2452) and when the voltage measured through the voltage detection circuit (2460) reaches a reference voltage value, turn on the switching device (2452).

3. The cleaner of claim 2, wherein the reference voltage value comprises a voltage value at a time when the capacitor (2470) is charged to at least a certain level and the voltage value is determined based at least in part on a minimum output value of the battery (1500).

4. The cleaner of claim 3, wherein the reference voltage value is 15 V to 25 V.

5. The cleaner of claim 1, wherein the resistor (2451) is arranged in parallel with the switching device (2452) and in series with the capacitor (2470).

6. The cleaner of claim 1, wherein a value of the resistor (2451) is determined based at least in part on a supply voltage of the battery (1500) and a maximum threshold value of the inrush current.

7. The cleaner of claim 6, wherein the value of the resistor (2451) configured to reduce the inrush current is 5 $\Omega$ to 50 $\Omega$.

8. The cleaner of claim 1, wherein the threshold rate is a rate at which at least 1.5 V is dropped within one of 2 ms to 7 ms.

9. The cleaner of claim 1, wherein the cleaner body (1000) comprises:

   a pulse width modulation (PWM) control switching device (1133) used to control power supply to the brush device (2000),

a load detection sensor (1134) configured to detect a load of the brush device (2000), and
at least one processor configured to control the PWM control switching device (1133) to block power supply to the brush device (2000) when a load value of the brush device (2000) measured through the load detection sensor (1134) reaches a reference load value at which to suspend operation of the brush device (2000).

10. The cleaner of claim 9, wherein at least one processor of the cleaner body (1000) is configured to

determine a type of the brush device (2000) including an identification resistor (2500) corresponding to a voltage value input to an input port through a signal line (30), and
maintain the PWM control switching device (1133), which is used to control power supply to the brush device (2000), in an ON state when the determined type of the brush device (2000) is a brush device (2000) including the capacitor (2470).

11. The cleaner of claim 9, wherein the at least one processor of the cleaner body (1000) is configured to

detect decoupling of the brush device (2000) from the cleaner body (1000) by using a voltage value input to an input port of the at least one processor through the load detection sensor (1134) or a signal line (30), and
switch an operation mode of the cleaner body (1000) from a brush mode to a handy mode as the brush device (2000) is decoupled from the cleaner body (1000).

12. The cleaner of claim 1, wherein the brush device (2000) further comprises a current detection circuit configured to measure a current applied to the brush device (2000) from the battery (1500), and
wherein the processor (2410) of the brush device (2000) is configured to turn off the switching device (2452) included in the inrush current reduction circuit (2450) based on a drop rate of a current measured through the current detection circuit being at least a threshold rate.

13. The cleaner of claim 11, wherein the threshold rate is a rate at which at least 0.5 A is dropped within one of 2 ms to 5 ms.

14. A method of reducing an inrush current of a cleaner including a cleaner body (1000) and a brush device (2000) coupled to the cleaner body (1000) and including a capacitor (2470), the method comprising:

measuring, by a processor (2410) of the brush device (2000) through a voltage detection circuit (2460), a voltage applied to the brush device (2000) from a battery (1500);
determining, by the processor (2410) of the brush device (2000), whether a drop rate of the voltage measured through the voltage detection circuit (2460) is at least a threshold rate; and
turning off, by the processor (2410) of the brush device (2000), a switching device (2452) included in an inrush current reduction circuit (2450) based on the drop rate of the voltage measured through the voltage detection circuit (2460) being at least the threshold rate.

15. The method of claim 14, further comprising turning off, by the processor (2410) of the brush device (2000), the switching device (2452), and when the voltage measured through the voltage detection circuit (2460) reaches a reference voltage value, turning on, by the processor (2410) of the brush device (2000), the switching device (2452).

FIG. 1

FIG. 2

# FIG. 3

1000

1100

1131

2000

2410

| BATTERY | MAIN PROCESSOR | FIRST PROCESSOR | SECOND PROCESSOR |

1500 — BATTERY
1800 — MAIN PROCESSOR
FIRST PROCESSOR
SECOND PROCESSOR

UART — UART — SIGNAL LINE COMMUNICATION

BATTERY VOLTAGE STATE
(NORMAL, ABNORMAL,
FULLY CHARGED,
COMPLETELY
DISCHARGED, ETC.)

SVM ALGORITHM
ON/OFF BUTTON
+/- SETTING BUTTON
DISPLAY CONTROL
BLE COMMUNICATION

I2C

1400 — PRESSURE SENSOR

FLOW PATH PRESSURE
(NEGATIVE PRESSURE)

BRUSH LOAD CURRENT
SUCTION FORCE INTENSITY
BLDC OPERATION RPM
BRUSH TYPE
STATUS (NORMAL,
ABNORMAL, ETC.)
WATER INFLOW DETECTION

BRUSH DRUM RPM
TRIP (OVERLOAD) LEVEL
INRUSH CURRENT REDUCTION

EP 4 668 535 A1

# FIG. 4

Row 410: 2000 — LIGHTING DEVICE(2300), MOTOR(2100)+PLANETARY GEAR(2101), PLANETARY GEAR(2101), DRUM(2200)

DRIVING CIRCUIT (PCB)(PCB) — 2400

| 2460 | VOLTAGE DETECTION CIRCUIT |
| 2470 | CAPACITOR |
| 2450 | INRUSH CURRENT REDUCTION CIRCUIT |

PROCESSOR — 2410

Row 420: 2000 — LIGHTING DEVICE(2300), MOTOR(2100)

| MULTI-BRUSH | FLOOR BRUSH | WET MOP BRUSH | TURBO (CARPET) BRUSH | BEDCHOTHES BRUSH |
|---|---|---|---|---|
| 401 | 402 | 403 | 404 | 405 |

EP 4 668 535 A1

# FIG. 5

BATTERY (1500)

CLEANER BODY (1000)

EXTENSION PIPE (3000)

BRUSH DEVICE (2000)

+30~19V

+25.2V

+25.2V (10)

+25.2V

MOTOR

GND

GND (20)

GND

1131

FET

FIRST PROCESSOR  α

Signal

Signal (30)

Signal

2100

A  ID RESISTOR (2500)

LOAD DETECTION SENSOR (1134)

100k

B

C

BRUSH TYPE DETECTION

$$\text{AD PORT INPUT VOLTAGE OF FIRST PROCESSOR} = \text{BATTERY SUPPLY VOLTAGE (25.2V)} * \frac{C}{A+B+C}$$

EP 4 668 535 A1

FIG. 6

EP 4 668 535 A1

600

| Brush Type | ID RESISTOR (Ω) | Battery 25V Max (6S1P) | | | Battery 29.2V Max (7S1P) | | | NOTE |
|---|---|---|---|---|---|---|---|---|
| | | 15.6 | 21.6 | 25.0 | 18.2 | 25.2 | 29.2 | |
| Wet Brush | Short | 3.105 | 4.299 | 4.976 | 3.622 | 5.016 | 5.812 | |
| (AI) Multi-Brush | 330K | 1.724 | 2.387 | 2.763 | 2.011 | 2.785 | 3.227 | |
| TURBO 2.0 Brush | 910K | 0.968 | 1.340 | 1.551 | 1.129 | 1.563 | 1.811 | |
| (AI) Floor Brush | 2.2M | 0.490 | 0.678 | 0.785 | 0.571 | 0.791 | 0.917 | |
| SPARE | 6.8M | 0.177 | 0.284 | 0.284 | 0.207 | 0.287 | 0.332 | |
| Soft Brush | Open | 0 | 0 | 0 | 0 | 0 | 0 | |

# FIG. 7A

CLEANER BODY (1000)

BRUSH DEVICE (2000)

MOTOR ASSEMBLY — 1100

BATTERY — 1500

POSITIVE POWER LINE

NEGATIVE POWER LINE

POWER CIRCUIT — 1138

FIRST PROCESSOR — 1131 / 1130

OUTPUT PORT

INPUT PORT

OUTPUT CIRCUIT — 1136

INPUT CIRCUIT — 1139

FIRST SWITCHING DEVICE — 1132

VOLTAGE DIVIDER — 1137

FIRST COMMUNICATION CIRCUIT

POSITIVE POWER LINE(10)

NEGATIVE POWER LINE(20)

SIGNAL LINE (30)

POWER CIRCUIT — 2440

MOTOR CONTROL CIRCUIT (INVERTER) — 2110

MOTOR — 2100

U V W

— 2400

SECOND PROCESSOR — 2410

ID RESISTOR — 2500

INPUT PORT

OUTPUT PORT

INPUT CIRCUIT — 2420

OUTPUT CIRCUIT — 2430

SECOND SWITCHING DEVICE — 2435

SECOND COMMUNICATION CIRCUIT

EP 4 668 535 A1

# FIG. 7B

CLEANER BODY (1000) — 1100

EXTENSION PIPE (3000)

BRUSH DEVICE (2000) — 2400

BATTERY — 1500

MOTOR ASSEMBLY — 1130

POSITIVE POWER LINE

NEGATIVE POWER LINE

POWER CIRCUIT — 1138

FIRST PROCESSOR — 1131

PWM CONTROL SWITCHING DEVICE — 1133

OUTPUT PORT

INPUT PORT

OUTPUT PORT — 1136

FIRST SWITCHING DEVICE — 1132

INPUT CIRCUIT — 1139

VOLTAGE DIVIDER — 1137

FIRST COMMUNICATION CIRCUIT

POSITIVE POWER LINE(10)

NEGATIVE POWER LINE(20)

SIGNAL LINE (30)

2440

POWER CIRCUIT

ID RESISTOR — 2500

2110

MOTOR CONTROL CIRCUIT (INVERTER)

U
V
W

MOTOR — 2100

SECOND PROCESSOR — 2410

INPUT PORT

OUTPUT PORT

INPUT CIRCUIT — 2420

OUTPUT CIRCUIT — 2430

SECOND SWITCHING DEVICE — 2435

SECOND COMMUNICATION CIRCUIT

EP 4 668 535 A1

# FIG. 7C

$$\text{AD PORT INPUT VOLTAGE} = \text{BATTERY SUPPLY VOLTAGE (25.2V)} * \frac{C}{A+B+C}$$

100

**BATTERY (1500)**
+30~19V

**MOTOR ASSEMBLY (1100)** 1130
+25.2V
GND
FET(1133)
1131
FIRST PROCESSOR
α
Signal
Output Port
AD Port
100k
B
C
1137
1132

**EXTENSION PIPE (3000)**
+25.2V (10)
GND (20)
Signal (30)

**BRUSH DEVICE (2000)** 2400
+25.2V 2440
POWER CIRCUIT
2110
MOTOR CONTROL CIRCUIT (INVERTER)
U
V
W
BLDC Motor
2100
GND
A 2500
5V
signal
Base
Emitter
2425
Input Port
2410
SECOND PROCESSOR
Output Port
2435

EP 4 668 535 A1

# FIG. 8

EP 4 668 535 A1

B Port = BATTERY SUPPLY VOLTAGE * $\frac{R3}{R2 + R3}$ (R2 = 47kΩ, R3 = 3kΩ)

= BATTERY SUPPLY VOLTAGE * $\frac{3kΩ}{47kΩ + 3kΩ}$

# FIG. 9

```
                    ┌──────────┐
                    │  START   │
                    └────┬─────┘
                         │
    ┌────────────────────▼────────────────────┐
    │ MEASURE, THROUGH VOLTAGE DETECTION       │
    │ CIRCUIT, VOLTAGE APPLIED TO BRUSH        │──── S910
    │ DEVICE FROM BATTERY                      │
    └────────────────────┬────────────────────┘
                         │
                         ▼
              ◇◇◇◇◇◇◇◇◇◇◇◇◇◇◇◇◇◇
         ◇◇◇◇        DROP RATE        ◇◇◇◇ ──── S920
  NO ◇◇◇   OF MEASURED VOLTAGE ≥         ◇◇
   ◇◇◇◇◇◇        THRESHOLD RATE?     ◇◇◇◇◇
          ◇◇◇◇◇◇◇◇◇◇◇◇◇◇◇◇◇◇◇
                         │ YES
                         ▼
    ┌─────────────────────────────────────────┐
    │ TURN OFF SWITCHING DEVICE INCLUDED       │──── S930
    │ IN INRUSH CURRENT REDUCTION CIRCUIT      │
    └────────────────────┬────────────────────┘
                         │
                    ┌────▼─────┐
                    │   END    │
                    └──────────┘
```

# FIG. 10

START

MEASURE, THROUGH VOLTAGE DETECTION CIRCUIT, VOLTAGE APPLIED TO BRUSH DEVICE FROM BATTERY — S1010

MEASURED VOLTAGE $\geq$ REFERENCE VOLTAGE VALUE? — S1020

NO

S1040

BRUSH DEVICE IS DECOUPLED FROM CLEANER BODY

YES

TURN ON SWITCHING DEVICE INCLUDED IN INRUSH CURRENT REDUCTION CIRCUIT — S1030

END

# FIG. 11

INPUT VOLTAGE (BATTERY) DETECTION CIRCUIT

SECOND PROCESSOR DETECT BATTERY SUPPLY VOLTAGE THROUGH DIVIDER RESISTOR

B PORT OF SECOND PROCESSOR = BATTERY SUPPLY VOLTAGE $* \dfrac{R3}{R2 + R3}$ (R2 = 47kΩ, R3 = 3kΩ)

$$= \text{BATTERY SUPPLY VOLTAGE} * \dfrac{3k\Omega}{47k\Omega + 3k\Omega}$$

INRUSH CURRENT CONTROL FET
CURRENT PATH DEPENDING ON FET ON/OFF
① FET OFF : HANDY BODY → PIPE → INSIDE OF BRUSH(C1 → R1 → GND)
② FET ON : HANDY BODY → PIPE → INSIDE OF BRUSH(C1 → FET D-S → GND)
    (C1 = 270μF, R1 = 15Ω)

# FIG. 12

BRUSH SUPPLY VOLTAGE
MAIN BODY → BRUSH

T₀ (SHOCK)

Hot swap protection working point

1ms

0.5ms Inrush MOS off time

BRUSH FET #1
OPERATION

ON          OFF

BRUSH SUPPLY CURRENT
MAIN BODY → BRUSH

FIG. 13

# FIG. 14

2450-1

BATTERY SUPPLY
VOLTAGE

2451
R1

Q1

S    D

2452    G

2470

C1

CAPACITOR
(SMOOTHING)

2410

SECOND
PROCESSOR

# FIG. 15

2450-2

# FIG. 16

2450-3

P-Ch FET
Gate-Source Cap

+30V

P-Ch FET

C2 R

2457

S D

2455

Q1

G

2470

C1
CAPACITOR
(SMOOTHING)

2410

SECOND
PROCESSOR

output

2456

C

B Q2

E

# FIG. 17

2450-4

BATTERY + POWER SOURCE

N-Ch FET
Q1
2458
D  S
G

2410
SECOND
PROCESSOR

2459
output  Q2

2457
C2
N-Ch FET
Gate-Source Cap

2470
C1  CAPACITOR
(SMOOTHING)

# FIG. 18

START

MEASURE, THROUGH CURRENT DETECTION
CIRCUIT, CURRENT APPLIED TO BRUSH
DEVICE FROM BATTERY
— S1810

DROP RATE OF
MEASURED CURRENT ≥
THRESHOLD RATE?
— S1820

NO

YES

TURN OFF SWITCHING DEVICE INCLUDED
IN INRUSH CURRENT REDUCTION CIRCUIT
— S1830

END

# FIG. 19

START

DETECT DECOUPLING OF BRUSH DEVICE —S1910

SWITCH TO HANDY MODE FROM BRUSH MODE —S1920

END

# FIG. 20

※ SPECIFICATIONS OF HANDY MODE AND
  BRUSH OPERATION MODE

| No | OPERATION MODE | | SUCTION MOTOR CONSUMPTION POWER | USE PERIOD | SUCTION FORCE |
|---|---|---|---|---|---|
| 1 | HANDY MODE (2001) | JET | 580W | 3 minutes | 220W |
| 2 | | ULTRA-STRONG | 320W | 10 minutes | 125W |
| 3 | | STRONG | 113W | 30 minutes | 40W |
| 4 | | NORMAL | 58W | 60 minutes | 18W |
| 5 | BRUSH MODE (2002) | JET | 335W | 9 minutes | 140W |
| 6 | | ULTRA-STRONG | 213W | 15 minutes | 90W |
| 7 | | STRONG | 115W | 25 minutes | 40W |
| 8 | | NORMAL | 58W | 50 minutes | 18W |
| 9 | | WET MOP | – | 80 minutes | – |

## INTERNATIONAL SEARCH REPORT

| International application No. |
| --- |
| **PCT/KR2024/006097** |

**A.  CLASSIFICATION OF SUBJECT MATTER**

**H02J 7/00**(2006.01)i; **H02J 7/34**(2006.01)i; **A47L 9/28**(2006.01)i; **A47L 9/04**(2006.01)i; **G01R 19/165**(2006.01)i; **H02M 1/32**(2007.01)i

According to International Patent Classification (IPC) or to both national classification and IPC

**B.  FIELDS SEARCHED**

Minimum documentation searched (classification system followed by classification symbols)

H02J 7/00(2006.01); A47L 9/04(2006.01); A47L 9/28(2006.01); G01R 31/382(2019.01); H01M 50/20(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 청소기(cleaner), 브러시(brush), 돌입 전류(inrush current), 커패시터 (capacitor), 스위치(switch)

**C.  DOCUMENTS CONSIDERED TO BE RELEVANT**

| Category* | Citation of document, with indication, where appropriate, of the relevant passages | Relevant to claim No. |
| --- | --- | --- |
| Y | JP 2019-092831 A (MITSUBISHI ELECTRIC CORP. et al.) 20 June 2019 (2019-06-20)<br>See paragraphs [0017]-[0085]; and figures 1-2. | 1-15 |
| Y | KR 10-0233510 B1 (LG ELECTRONICS INC.) 01 December 1999 (1999-12-01)<br>See paragraphs [0002] and [0011]-[0013]; and figure 2. | 1-15 |
| Y | KR 10-2022-0019990 A (SAMSUNG ELECTRONICS CO., LTD.) 18 February 2022 (2022-02-18)<br>See paragraphs [0117]-[0347]; and figures 2 and 6. | 9-11 |
| A | KR 10-2246769 B1 (SAMSUNG SDI CO., LTD.) 30 April 2021 (2021-04-30)<br>See paragraphs [0029]-[0057]; and figure 1. | 1-15 |
| A | JP 5180008 B2 (TOSHIBA CORP. et al.) 10 April 2013 (2013-04-10)<br>See paragraphs [0055]-[0077]; and figures 5-6. | 1-15 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 August 2024** | **08 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/006097**

| Patent document cited in search report | | | Publication date (day/month/year) | Patent family member(s) | | | Publication date (day/month/year) |
|---|---|---|---|---|---|---|---|
| JP | 2019-092831 | A | 20 June 2019 | JP | 7098917 | B2 | 12 July 2022 |
| KR | 10-0233510 | B1 | 01 December 1999 | KR | 10-1999-0050242 | A | 05 July 1999 |
| KR | 10-2022-0019990 | A | 18 February 2022 | WO | 2022-035041 | A1 | 17 February 2022 |
| KR | 10-2246769 | B1 | 30 April 2021 | EP | 3319201 | A1 | 09 May 2018 |
| | | | | EP | 3319201 | B1 | 30 September 2020 |
| | | | | KR | 10-2018-0050960 | A | 16 May 2018 |
| | | | | US | 10381847 | B2 | 13 August 2019 |
| | | | | US | 2018-0131205 | A1 | 10 May 2018 |
| JP | 5180008 | B2 | 10 April 2013 | JP | 2010-051582 | A | 11 March 2010 |

Form PCT/ISA/210 (patent family annex) (July 2022)